# EUROPEAN PATENT SPECIFICATION

(11) **EP 3 215 412 B1**
(45) Date of publication and mention of the grant of the patent: **08.05.2019**
(21) Application number: 15857294.1
(22) Date of filing: 04.11.2015
(51) Int. Cl.: B62D 7/18, B60G 3/20

(54) **STEERING KNUCKLE APPARATUS FOR A VEHICLE**
ACHSSCHENKEL FÜR EIN FAHRZEUG
APPAREIL PORTE-FUSÉE DE DIRECTION POUR VÉHICULE

(30) Priority: 04.11.2014 US 201414532564; 06.10.2015 US 201514876367
(43) Date of publication of application: 13.09.2017
(73) Proprietor: Hitachi Metals, Ltd., Tokyo 108-8224 (JP)
(72) Inventor: CONNER, Aaron, Novi, MI 48375 (US); BOWEN, Rick, Novi, MI 48375 (US); WALKER, Ronald, Novi, MI 48375 (US); SHIOZAWA, Satoru, Moka-shi Tochigi 321-4303 (JP)
(74) Representative: Gill, David Alan
(86) International application number: PCT/US2015/059017
(87) International publication number: WO 2016/073592

(56) References cited:
- CN-A- 104 276 209
- DE-A1-102007 053 120
- IN-A- 844M UM2 012
- JP-A- 2001 187 583
- US-A- 2 771 301
- US-A- 5 120 150
- US-A- 5 366 233
- US-A- 5 366 233
- US-B1- 6 179 308

## Description

### BACKGROUND OF THE INVENTION

### FIELD OF THE INVENTION

The invention relates to a steering knuckle for a vehicle including a body part, a hollow part, an arm portion, and a connecting portion.

### DESCRIPTION OF THE RELATED ART

In a conventional steering knuckle apparatus including a body part, a hollow part, an arm portion, and a connecting portion, a thickness of the material surrounding the hollow part is increased or a size of the hollow portion is decreased to increase rigidity of the steering knuckle (e.g., see JP-A 2001-187583 and JP-A 2001-114127).

In a steering knuckle described in JP-A 2001-187583, at least two hollow parts formed in arms communicate with each other in a cylindrical part, and/or the hollow parts at least partially pass through the cylindrical part and communicate with an axial hole. Further, a direction of a hollow part opening, a shape in a vicinity of the hollow part opening, a wall thickness of the cylindrical part, and a wall thickness of a hollow part arm outer surface, are appropriately selected.

In a steering knuckle described in JP-A 2001-114127, a strut mounting arm projecting upward from a knuckle body is connected to an end of a strut, and a lower arm mounting arm projecting downward from the knuckle body is connected to a top of a lower arm through a king pin together. A hollow part is provided to open in an extending direction of the strut mounting arm on the middle in a longitudinal direction of a surface of the strut mounting arm on an outer side of an automobile body.

Please refer to JP-A 2001-187583 and JP-A 2001-114127.

In a method for making a steering knuckle described in DE 10 2007 053120 A1, a method for strengthening a cup or tub shaped wheel carrier made from a laminar textile in provided, wherein a load introduction element is preformed from a metal, ceramic or fiber composite material. In particular, from DE 10 2007 053120 A1, it is possible to directly derive the teachings to manufacture a vehicle steering knuckle, comprising:
a body part to which an axle is attached;
an arm portion including one end integrally connected with an outer periphery of the body part and spreading outwardly from the body part along an extending axis; and
a connecting portion integrally connected with another end of the arm portion, the connecting portion being configured to be connected with a vehicle component, wherein the arm portion comprises:
   a first portion integrally connected with the connecting portion in a direction along the extending axis;
   a second portion interposed between the first portion and the body part; and
   a hollow portion configured to communicate with the first portion and the second portion,
   wherein the second portion includes a peripheral wall including an opening partially opened around the extending axis.

In a steering knuckle described in US 5 366 233 A, the strength of the knuckle is improved by the inclusion of a steering arm link between opposing side walls of the knuckle housing, having a transverse wall opposite the steering arm link.

### SUMMARY OF THE INVENTION

However, in the above first-described steering knuckle having such a structure, the steering knuckle has a relatively large wall thickness of the cylindrical part and a relatively large wall thickness of a hollow part outer arm. Moreover, the hollow portion ratio is relatively small. The combination of the large thickness and the small hollow portion ratio significantly increases the weight of the steering knuckle.

However, in the above second-described steering knuckle having such a structure, rigidity of the steering knuckle is obtained by increasing the thickness to both sides along the hollow part which hinders downsizing/weight reduction of the steering knuckle.

Accordingly, it is an exemplary feature of the invention to provide a vehicle steering knuckle with an improved weight reduction in which the deformation and the damage of an arm portion are suppressed as compared to the conventional steering knuckles.

According to the first exemplary embodiment of the invention, a steering knuckle apparatus includes:
a body part to which an axle is attached;
an arm portion including one end integrally connected with an outer periphery of the body part and spreading outwardly from the body part along an extending axis; and
a connecting portion integrally connected with another end of the arm portion, the connecting portion being configured to be connected with a vehicle component,
wherein the arm portion includes:
   a first portion integrally connected with the connecting portion in a direction along the extending axis;
   a second portion interposed between the first portion and the body part; and
   a hollow portion configured to communicate with the first portion and the second portion,
   wherein the first portion includes a peripheral wall configured to enclose around the extending axis,
   wherein the second portion includes a peripheral wall including an opening partially opened around the extending axis,
   wherein, at a cross-section intersecting the extending axis, an end portion of the peripheral wall of the second portion on a side of the opening comprises an enlarged portion which is enlarged in width as compared with thickness of side portions adjacent to the end portion.

According to the second exemplary embodiment, a steering knuckle apparatus to which an axle is attached, includes:
a body part to which the axle is attached;
an arm portion including one end integrally connected with an outer periphery of the body part and spreading outwardly from the body part along an extending axis; and
a connecting portion integrally connected with another end of the arm portion, the connecting portion being configured to be connected with a vehicle component,
wherein the arm portion includes:
   an opening having the extending axis therethrough; and
   an end portion configured to surround the opening, a width of the end portion being defined from an edge of the opening to a distal edge of the end portion in a vehicle width direction,
   wherein a first width at a center of the end portion is less than a second width measured nearer to the connecting portion of the end portion, and
   wherein the first width at the center of the end portion is less than a third width measured nearer to the body part of the end portion.

According to the third exemplary embodiment, a steering knuckle apparatus to which an axle is attached includes:
a body part to which the axle is attached;
an arm portion including one end integrally connected with an outer periphery of the body part and spreading outwardly from the body part along an extending axis; and
a connecting portion integrally connected with another end of the arm portion, the connecting portion being configured to be connected with a vehicle component,
wherein the arm portion includes:
   a portion interposed between the connecting portion and the body part;
   an opening having the extending axis therethrough;
   a hollow portion configured to communicate with the opening and the portion, wherein the portion includes a peripheral wall having a first length, and
   wherein, at a cross-section intersecting the extending axis, an end portion of the peripheral wall of the portion on a side of the opening comprises an enlarged portion which has a second length, the second length being greater than the first length.

In the above exemplary embodiments of the steering knuckle apparatus, various modifications can be made including the following modifications and changes, either singly or in combination.
(i) The enlarged portion can be located to intersect a direction of a force acting on the arm portion via the connecting portion.
(ii) At the cross-section intersecting the extending axis, the enlarged portion can be provided at both sides of the opening.
(iii) In the direction along the extending axis, the enlarged portion can be extending toward the first portion and integrated with the peripheral wall of the first portion.
(iv) In the direction along the extending axis, the enlarged portion can be extending toward the body part and integrated with the body part.
(v) A width of the enlarged portion can be increased from a center of the second portion toward the first portion or the body part along the extending axis.
(vi) An outer surface of the enlarged portion may include two or more surfaces formed along the extending axis.
(vii) At the cross-section intersecting the extending axis, the enlarged portion may intersect side portions of the peripheral wall to have a substantially T-shape.

### EFFECTS OF THE INVENTION

According to one exemplary embodiment of the invention, a technical problem of the conventional steering knuckles can be solved by providing an enlarged portion on a side of an opening. The weight reduction degree can be achieved by increasing a volume of a hollow portion and an area of an opening.

More specifically, weight reduction of a steering knuckle can be achieved by providing a hollow portion configured to communicate with a first portion and a second portion, and providing an opening at a peripheral wall surrounding the second portion. Moreover, rigidity of the arm portion can be improved by integrally (i.e., having a unitary construction as one piece) connecting a first portion to a connecting portion which is a point of action where a load acts on the arm portion, and providing the first portion with a closed structure comprising a peripheral wall enclosing a space around an extending axis, thereby suppressing the deformation of the arm portion when the load acts on the arm portion.

Additionally, a stress occurring on a surface of an end portion formed on an opening-side of the peripheral wall of the second portion can be relaxed by providing the end portion as an enlarged portion, thereby enhancing the strength of the second portion.

### BRIEF DESCRIPTION OF THE DRAWINGS

Next, the present invention will be explained in more detail in conjunction with the attached exemplary drawings, wherein:
**FIG.1** is a perspective view showing a steering knuckle apparatus in a first embodiment of the present invention;
**FIG.2** is a cross-sectional view taken along a 2-2 plane in **FIG.1****;**
**FIG.3** is a view on arrow 3-3 in **FIG.1****;**
**FIG.4** is a view on arrow 4-4 in **FIG.1****;**
**FIG.5** is a view on arrow 5-5 in **FIG.1****;**
**FIG.6** is a schematic plan diagram of a suspension device to which the present invention may be applied;
**FIG.7A** is a cross-sectional view of the steering knuckle in **FIG.3****;**
**FIG.7B** is a cross-sectional view of the steering knuckle in **FIG.3****;**
**FIG.7C** is a cross-sectional view of the steering knuckle in **FIG.3****;**
**FIG.7D** is a cross-sectional view of the steering knuckle in **FIG.3****;**
**FIG.7E** is a cross-sectional view of the steering knuckle in **FIG.3****;**
**FIG.7F** is a cross-sectional view of the steering knuckle in **FIG.3****;**
**FIG.8** is an enlarged view of part D of **FIG.7A****;**
**FIG.9** is an explanatory diagram for explaining a simplified model in which an arm portion and a connecting portion of the vehicle steering knuckle shown in **FIG.1** are simplified;
**FIG.10** is an explanatory diagram for explaining a simplified model in which an arm portion and a connecting portion of the vehicle steering knuckle shown in **FIG.1** are simplified;
**FIG. 11** is a diagram showing simplified models TP in Examples and comparative examples;
**FIG.12A** is a diagram showing an input position and directions of external force F for evaluating the model TP;
**FIG.12B** is a diagram showing an input position and directions of external force M for evaluating the model TP;
**FIG.13A** shows front views of respective models TP, each of which describes a width and an enlarged portion;
**FIG.13B** shows side views of the respective models TP in **FIG.13A****;**
**FIG.13C** shows **6-6** sectional views of the respective models TP in **FIG.13A****;**
**FIG.13D** is a diagram showing the width of the enlarged portion in each model TP;
**FIG.13E** is a diagram showing the width of the enlarged portion in each model TP;
**FIG.13F** is a diagram showing the width of the enlarged portion in each model TP;
**FIG.13G** is a diagram showing the width of the enlarged portion in each model TP;
**FIG.14** is a table showing relationship between respective parameters and maximum principal stress from the first viewpoint;
**FIG.15A** shows graphs showing the evaluation results of the models from the first viewpoint.
**FIG.15B** shows graphs showing the evaluation results of the models from the first viewpoint.
**FIG.15C** shows graphs showing the evaluation results of the models from the first viewpoint;
**FIG. 16** is a table showing relationship between respective parameters and maximum principal stress from the second viewpoint;
**FIG.17A** shows graphs showing the evaluation results of the models from the second viewpoint.
**FIG.17B** shows graphs showing the evaluation results of the models from the second viewpoint.
**FIG.17C** shows graphs showing the evaluation results of the models from the second viewpoint;
**FIG. 18** is a table showing relationship between respective parameters and maximum principal stress from the first viewpoint;
**FIG.19A** shows graphs showing the evaluation results of the models from the third viewpoint;
**FIG.19B** shows graphs showing the evaluation results of the models from the third viewpoint;
**FIG.19C** shows graphs showing the evaluation results of the models from the third viewpoint;
**FIG.19D** shows graphs showing the evaluation results of the models from the third viewpoint;
**FIG.20A** is a chart showing the result of a measurement of the maximum principal stress (rotation) in an arm portion of a vehicle steering knuckle (Example **1**) having an enlarged portion shown in **FIG.1****;**
**FIG.20B** is a chart showing the result of a measurement of the maximum principal stress (translation) in an arm portion of a vehicle steering knuckle (comparative example **1**) having no enlarged portion in comparison with the vehicle steering knuckle shown in **FIG.1****;**
**FIG.21A** is a chart showing the result of a measurement of the maximum principal stress (rotation) in the arm portion of Example **1;** and
**FIG.21B** is a chart showing the result of a measurement of the maximum principal stress (translation) in the arm portion of comparative example **1.**

### DETAILED DESCRIPTION OF THE EXEMPLARY EMBODIMENTS

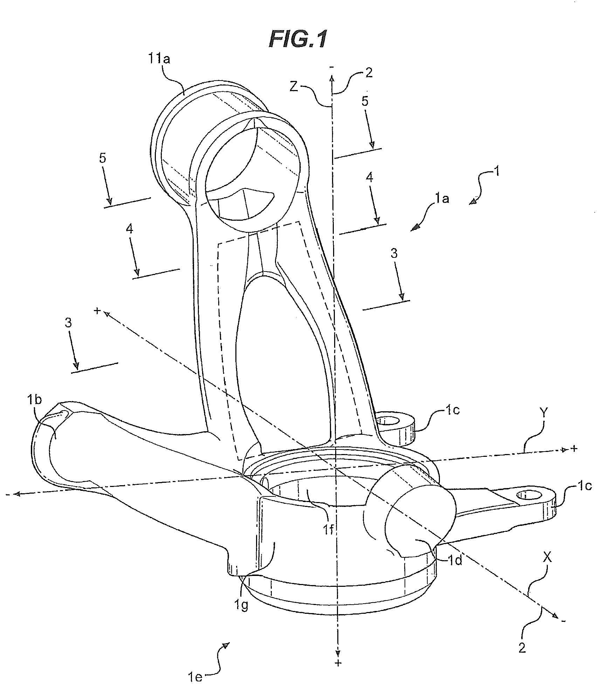

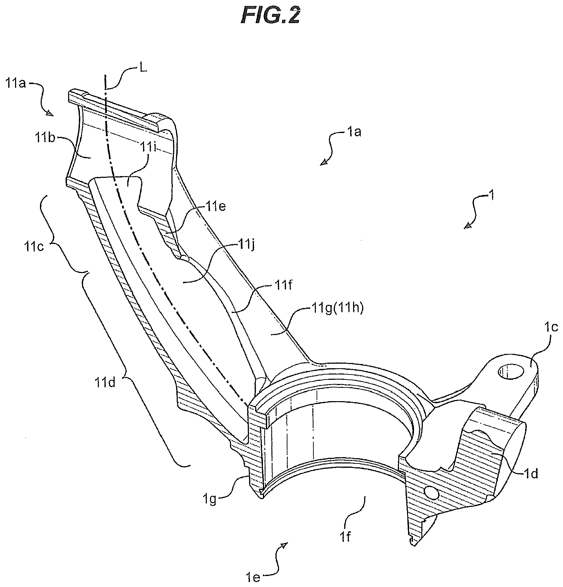

Next, the present invention will be explained in more detail in conjunction with the attached exemplary drawings. **FIG.1** is a perspective view showing a steering knuckle apparatus in a first exemplary embodiment of the invention. **FIG.2** is a cross-sectional view taken along a **2-2** plane in **FIG.1****.**

As shown in **FIG.1** and **FIG.2****,** the steering knuckle **1** is formed in one-piece (i.e., integrally having a unitary construction) and is provided with an arm portion (e.g., strut arm) **1**a, a tie rod arm **1**b, lower control arm-attaching arms **1**d, a body part **1**e, and a connecting portion **11a.** A material of the steering knuckle **1** may be cast iron, aluminum, steel, or any similar material. The material of the steering knuckle is generally known to those skilled in the art and will not be described in greater detail.

The arm portion **1**a includes one end integrally connected with an outer periphery **1**g of the body part **1**e and spreading outwardly from the body part **1**e along an extending axis L (see **FIG.2**). The connecting portion **11**a is integrally connected with another end of the arm portion **1**a. The connecting portion **11**a is configured to be connected with a vehicle component (i.e., a strut). The body part **1**e includes a brake arm **1**c and an axle attaching hole **1**f.

As shown in **FIG.2****,** the arm portion **1**a is provided with a strut attaching hole **11**b, a first portion **11**c integrally connected with the connection portion **11**a in a direction along the extending axis L, a second portion **11**d which is provided between the first portion **11**c and the body part **1**e, an upper opening aperture **11**i disposed on an inner surface of the connection portion **11**a nearest the first portion **11**c**,** and a hollow portion **11**j which communicates with the first portion **11**c and the second portion **11**d. The first portion **11**c has a peripheral wall **11**e which encloses the extending axis L. The second portion **11**d has a peripheral wall **11**g including an opening **11**f which is partially opened around the extending axis L. The opening **11**f may have an oval shape but may have other exemplary shapes such as an omega-like shape.

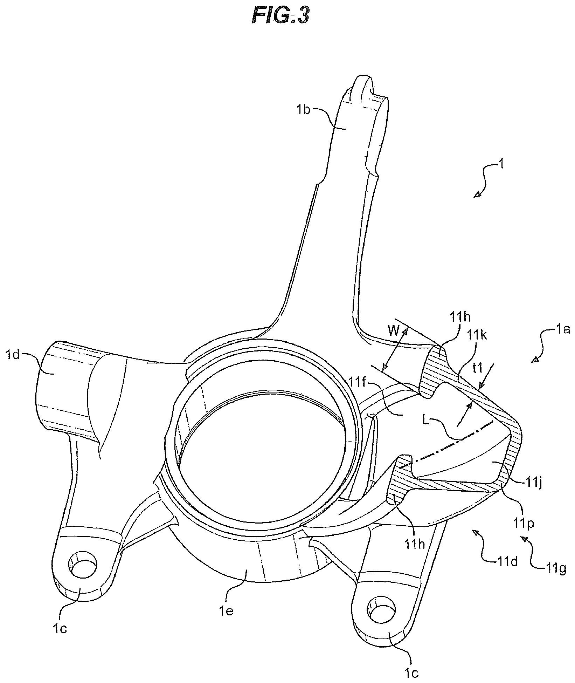

**FIG.3** shows a cross-section intersecting the extending axis L on arrow **3-3** of **FIG.1****.** An end portion **11**h of the peripheral wall **11**g of the second portion **11**d on a side of the opening **11**f has an enlarged portion (**11**h, having width W) which is enlarged in its width relative to side portions (**11**k, having thickness t**1**) of the peripheral wall **11**g adjacent to the end portion **11**h. A width W (i.e., second length) of the enlarged portion **11**h is greater than a thickness t**1** (i.e., first length) of the side portion **11**k as the other portion. The width W may be between 2.0 and 7.0 times greater than the thickness t**1**. The width W may be between 2.75 and 6.75 times greater than the thickness t**1**. More preferably, the width W may be between 4.2 and 6.75, 3.0 and 5.6, or 2.75 and 4.6 times greater than the thickness t**1**. Most preferably, the width W may be 5.3, 5.5, or 4.5 times greater than the thickness t**1**. It should be noted that the thickness t**1** may be an average width in the case where the thickness t**1** of the side portion **11**k is not uniform.

Further, the enlarged portion **11**h is provided at both sides of the opening **11**f at the cross-section intersecting the extending axis L. The enlarged portion **11**h extends in a direction along the extending axis L toward the body part **1**e. The enlarged portion **11**h is formed integrally with the body part **1**e.

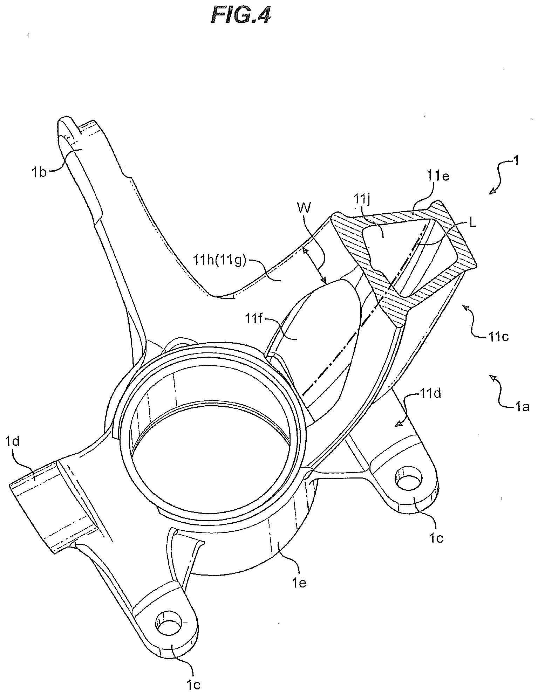

Turning to **FIG.4, FIG.4** shows a cross-section intersection of the extending axis L on arrow **4-4** of **FIG.1****.** The enlarged portion **11**h extends in a direction along the extending axis L toward the first portion **11**c. The enlarged portion **11**h is integrally formed with the peripheral wall **11**e of the first portion **11**c.

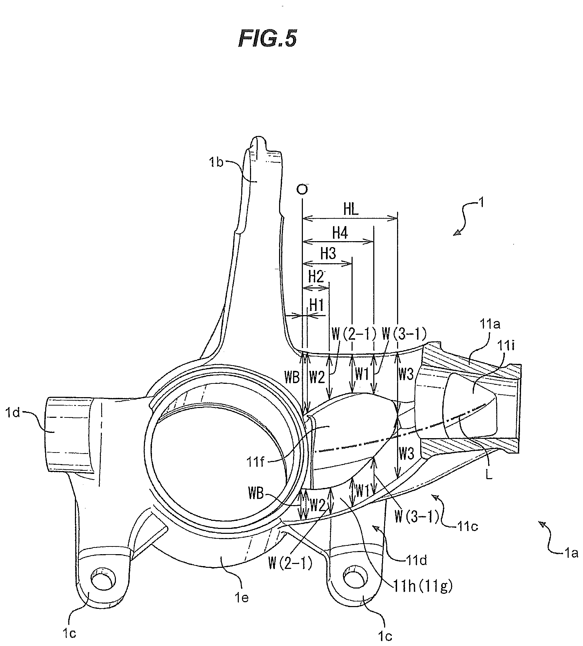

**FIG.5** shows a cross-section intersection of the extending axis L on arrow **5-5** of **FIG.1****.** As seen in **FIG.5****,** the oval (e.g., omega-like) cross-section of the opening **11**f varies a width W of the enlarged portion **11**h at various points along the extending axis L. The enlarged portion **11**h illustrated in an upper part in **FIG.5** (the Y (-) side in **FIG.1**) and the enlarged portion **11**h in a lower part in **FIG.5** (the Y (+) side in **FIG.1**) are arranged as one pair via the opening **11**f. Although the enlarged portions **11**h in the upper part and the lower part in **FIG.5** are asymmetrical to each other in this exemplary embodiment, the width W of the enlarged portion **11**h increases from substantially a center of the second portion **11**d toward the first portion **11**c along the extending axis L. The width W of the enlarged portion **11**h increases from substantially the center of the second portion **11**d toward the body part **1**e along the extending axis L, in both the upper and lower parts in **FIG.5****.**

### (W1)

Next, the detail of the width W of the enlarged portion **11**h in the upper part of **FIG.5** will be explained below (similar explanation is applicable to the width W of the enlarged portion **11**h in the lower part of **FIG.5**)**.**

In the above exemplary embodiment of the steering knuckle apparatus, as seen in **FIG.5****,** a first width **W1** of the enlarged portion **11**h is defined as a width which is measured at the location nearest to a distal edge of the enlarged portion **11**h where an edge of the opening **11**f constitutes an outer surface of the arm portion **1**a. Here, when the position of the first portion **11**c-side edge of the opening **11**f along the extending axis L direction is O and the position of the body section **1**e-side edge of the opening **11**f along the extending axis L direction is HL, a position H**3** of the first width W**1** is substantially at the middle of the position O and the position HL in the aforementioned exemplary embodiment.

### (W2)

Then, a second width W**2** of the enlarged portion **11**h is defined as a width of a region extending from a position H**2** located at the center between the position H**3** and the position O until the position O, which is measured at an arbitrary position H1 located in parallel with the first width W**1**.

Also, when a width of the enlarged portion **11**h at the position H**2** is WB and a width of the enlarged portion **11**h at the position O is W(**2-1**), a relationship W**1**≤W(**2-1**)≤W**2**≤WB is established. The second width W**2** preferably is greater than the first width W**1** (W**1**<W**2**). More preferably, the second width W**2** may be between 1.1 and 1.7 times greater than the first width W**1**. Even more preferably, the second width W**2** may be between 1.15 and 1.55 times greater than the first width W**1**. The second width W**2** may be between 1.2 and 1.51 times greater than the first width W**1**. Most preferably, the second width W**2** may be 1.22, or 1.5 times greater than first width W**1**. The above relationship is similarly established for the enlarged portion **11h** of the lower part of **FIG.5****.**

### (W3)

Then, a third width W**3** of the enlarged portion **11**h is defined as a width of a region extending from a position H**4** located at the center between the position H**3** and the position HL until the position HL, which is measured at the arbitrary position H**1** located in parallel with the first width W**1**.

Also, when a width of the enlarged portion **11**h at the position H**4** is W(**3-1**), a relationship W**1**≤W(**3-1**)≤W**3** is established. The third width W**3** preferably is greater than the first width W**1**. More preferably, the second width W**3** may be between 1.1 and 2.6 times greater than the first width W**1**. Even more preferably, the second width W**3** may be between 1.3 and 2.2 times greater than the first width W**1**. The third width W**3** may be between 1.3 and 1.7, or between 1.65 and 2.2 times greater than the first width W**1**. Most preferably, the second width W**3** may be 1.35, 1.65, or 2.15 times greater than first width W**1**. The above relationship is similarly established for the enlarged portion **11h** of the lower part of **FIG.5****.**

It should be noted that the arm portion **1**a in the first exemplary embodiment
curves along the extending axis L. In such a configuration, O, H**1** to H**4**, and HL are defined as the positions viewed from the direction in which an area of the opening **11**f becomes the maximum when the arm portion **1**a is viewed perpendicularly to the extending axis L.

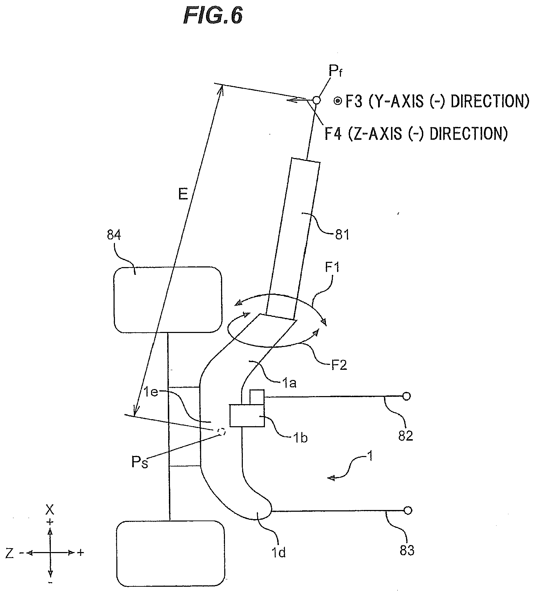

Referring to **FIG.6****,** the vehicle steering knuckle **1** may be attached to a suspension device of a motor vehicle including a strut **81,** a tie rod **82,** and a lower control arm **83,** and is positioned adjacent a tire **84** of the motor vehicle. The enlarged portion (**11**h, W) is located to intersect a direction of a force F**1** acting on the arm portion **1**a via the connection portion **11**a. A height direction of a vehicle body is defined as (+) being upward and (-) being downward. A longitudinal direction of the vehicle body is defined as (+) being forward and (-) being backward.

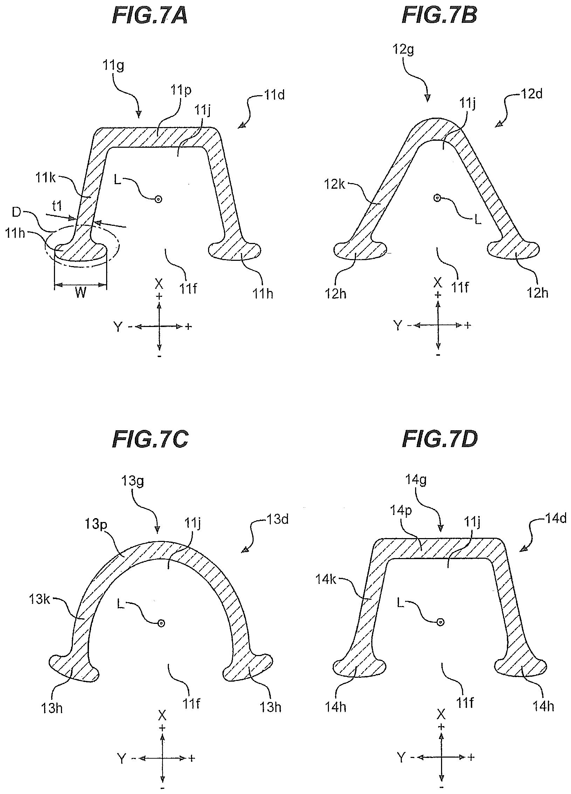

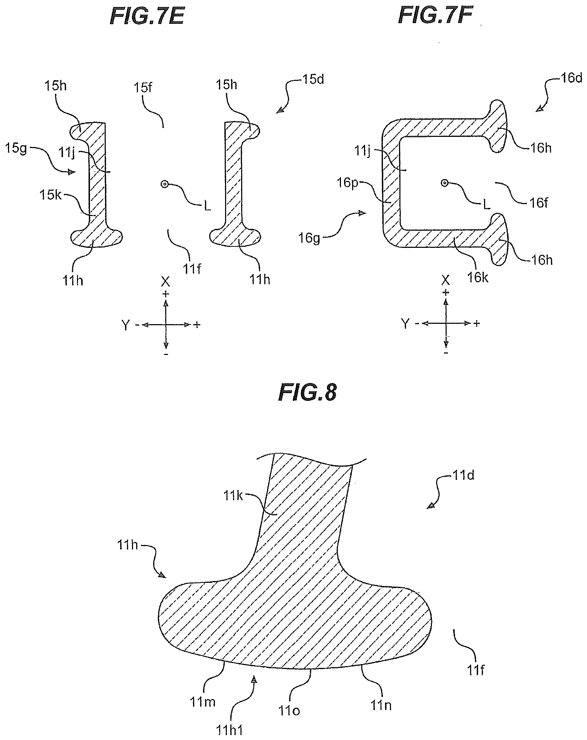

Next, a shape of the cross-section of **FIG.3** will be described in reference to **FIG.7A** and **FIG.8****.**

As shown in **FIG.7A****,** the cross-section has a substantially modified U-shape surrounding the hollow portion **11**j which is formed by the peripheral wall **11**g of the second portion **11**d. The peripheral wall **11**g includes the enlarged portion **11**h, a pair of side portion **11**k, and a back portion **11**p. The side portions **11**k are formed at each end of the back portion **11**p. The back portion **11**p and the side portions **11**k are integrally formed and connected with a fillet (i.e., substantially angled, tapered, or rounded corner) on an interior and exterior corner. The side portions **11**k are angled from a trough (i.e., angled with respect to a line extending along the trough) of the U-shape and the side portions **11**k substantially have the thickness t**1**. The back portion **11**p substantially has the thickness t**1**. The thickness t**1** of the back portion **11**p and the side portions **11**k may be a uniform thickness. However, the thickness t**1** of the back portion **11**p and the side portions **11**k may be non-uniform and vary based on mechanical stress requirements. The enlarged portion **11**h is formed at each end of the side portions **11**k and substantially has the width W.

**FIG.8** is an enlarged view of part D of **FIG.7**A. As shown in **FIG.8****,** the enlarged portion **11**h is integrally connected with a fillet at the end of the side portions **11**k. The fillet size is set to increase the mechanical strength of the steering apparatus **1.** The enlarged portion has a substantially tau-shaped cross-section. However, other cross-sections may be available. An outer surface **11**h**1** of the enlarged portion **11**h has a plurality of surfaces (**11**m, **11**n) which slope from the thickest portion of the enlarged portion away from the side portions **11**k and meet at a round portion **11**o substantially located at a center of the enlarged portion **11**h. Corners of the enlarged portion **11**h are rounded (e.g., angled, arc-shaped, elliptical-shaped, etc.).

### Functions and effects of the first embodiment

The following functions and effects are obtained in the first embodiment.

According to the embodiment of the steering knuckle apparatus **1,** a stress occurring on a surface of the end portion **11**h formed on the opening-side of the peripheral wall **11**g of the section portion **11**d can be relaxed by providing the end portion **11**h as the enlarged portion, thereby enhancing the strength of the second portion.

Moreover, weight reduction can be achieved when the hollow portion **11**j is configured to communicate with the first portion **11**c and the second portion **11**d, and by providing the opening **11**f at the peripheral wall **11**g surrounding the second portion **11**d.

Even further, rigidity of the arm portion can be improved by integrally (as one piece) connecting the first portion **11**c to the connecting portion **11**a which is a point of action where a load acts on the arm portion **1**a.

Rigidity of the arm portion **1**a can also be improved by providing the first portion **11**c with a closed structure having the peripheral wall **11**e enclosing a space around the extending axis L. The above configuration of the arm portion **1**a can suppress the deformation of the arm portion **1**a when the load acts on the arm portion **1**a.

Also, mechanical strength of the steering knuckle apparatus **1** can be enhanced by providing the enlarged portion **11**h on both sides of the opening **11**f. Mechanical strength of the steering knuckle apparatus **1** can be further enhanced by integrally forming the enlarged portion **11**h with the peripheral wall **11**e of the first portion **11**c. Mechanical strength of the steering knuckle apparatus **1** can be even further enhanced by integrating the enlarged portion **11**h with the body part **1**e.

According to the above embodiment of the steering knuckle apparatus **1,** a torsional stress can be reduced by increasing the width W of the enlarged portion **11**h along the extending axis L from the center of the second portion **11**d toward the first portion **11**c or toward the body part **1**e (i.e., W**1**<W**2**, W**1**<W**3**).

### Variations of the cross-section of FIG.7A

**FIGS.7B** to **7E** are cross-sectional views showing modifications in which shapes of the cross-section of **FIG.7A** may be changed so as to provide a modified weight efficient structure and modified cost effective structure that provides the required mechanical strength to carry loads F**1** and F**2**.

In general, in order to further suppress the stress concentration at the end portion, further enhance weight reduction, and/or increase mechanical strength of the steering knuckle apparatus, the cross-sectional surface shape of the enlarged portion **11**h may be modified as shown in **FIGS.7B** to **7E****.**

**FIG.7B** shows the cross-section of **FIG.3** in a modification in which a shape of the cross-section may be changed. As shown in **FIG.7B****,** the cross-section has a substantially modified V-shape surrounding the hollow portion **11**j which is formed by a peripheral wall **12**g of a second portion **12**d. The peripheral wall **12**g includes a pair of side portions **12**k which merge as the apex of the V-shape and enlarged portions **12**h. The side portions **12**k are integrally formed and connected with a fillet at the apex (i.e., angled, arc-shaped, or rounded corner) on an interior and exterior corner which rounds the apex between the side portions **12**k. The side portions **12**k are angled from the trough of the V-shape and the side portions **12**k substantially have the thickness t**1**. The enlarged portions **12**h are formed at each end of the side portions **12**k and substantially has the width W.

The substantially modified V-shape of **FIG.7B** may further improve the steering knuckle apparatus **1** and have similar beneficial effects of the exemplary embodiment of Figure **7A****.**

**FIG.7C** shows the cross-section of **FIG.3** in a modification in which a shape of the cross-section may be changed. As shown in **FIG.7C****,** the cross-section has a substantially modified arc-shape (e.g., substantially semi-circular) surrounding the hollow portion **11**j which is formed by a peripheral wall **13**g of a second portion **13**d. The peripheral wall **13**g includes a pair of side portions **13**k and enlarged portions **13**h. The enlarged portions 13h and the side portions **13**k are integrally formed. The enlarged portions **13**h are formed at each end of the side portions **13**k and substantially have the width W. The enlarged portions **13**h are angled upwardly and away from the opening **11**f. The enlarged portions **13**h are positioned such that more of the width W of the enlarged portions **13**h are disposed on a side of an exterior surface of the side portions **13**k. The side portions **13**k form a continuous curve along the arc-shape between the enlarged portions **13**h. The side portions **13**k substantially have the thickness t**1**.

The substantially modified arc-shape of **FIG.7C** may further improve the steering knuckle apparatus **1** and have similar beneficial effects of the exemplary embodiment of Figure **7A****.**

**FIG.7D** shows the cross-section of **FIG. 3** in a modification in which a shape of the cross-section may be changed. As shown in **FIG.7D****,** the cross-section has a substantially modified U-shape similar to the U-shape of **FIG.7A****.** Therefore, only the differences will be discussed. A thickness of the side portions **14**k gradually increases from a back portion **14**p to the enlarged portions **14**h. At a point where the side portions **14**k connect to the enlarged portion **14**h, a fillet on an exterior surface of the side portions **14**k may have a radius greater than a radius of the fillet on an exterior surface of the side portion **11**k. The enlarged portions **14**h are positioned such that more of the width W of the enlarged portions **14**h are disposed on a side of the exterior surface of the side portions **14**k.

The substantially modified arc-shape of **FIG.7D** may further improve a stress occurring on a surface of the enlarged portions **14**h formed on the opening-side of the peripheral wall **14**g of the section portion **14**d can be relaxed by a thicker connection point between the enlarged portions **14**h and the side portions **14**k, thereby enhancing the strength of the second portion.

Further, **FIG.7E** shows the cross-section of FIG.3 in a modification in which a shape of the cross-section may be changed. As shown in **FIG.7E****,** the cross-section has side portions **15**k of a peripheral wall **15**g of the second portion **15**d. Enlarged portions **11**h are formed at a first end of the side portions **15**k with the opening **11**f being disposed between the side portions **15**k at the first end. Enlarged portions **15**h are formed at a second end of the side portions **15**k with an opening **15**f being disposed between the side portions **15**k at the second end. The opening **11**f and the opening **15**f communicate with each other to form a through hole. The side portions **15**k are parallel to the height direction of the vehicle body (i.e., X-axis). The enlarged portions **15**h protrude on an exterior surface of the side portions **15**k and are co-planar on an interior surface of the side portions **15**k. The enlarged portions **15**h are integrally connected with a fillet at the first end of the side portions **15**k.

The substantially modified shape of FIG.7E may further improve the steering knuckle apparatus **1** and have similar beneficial effects of the exemplary embodiment of Figure **7A****.**

**FIG.7F** shows the cross-section of FIG.3 in a modification in which a shape of the cross-section may be changed. As shown in **FIG.7F****,** the cross-section has a substantially U-shape surrounding the hollow portion **11**j which is formed by the peripheral wall **16**g of the second portion **16**d. The peripheral wall 16g includes a back portion **16**p, a pair of side portions **16**k adjacent to end portions of the back portion **16**p, and enlarged portions **16**h. The side portions **16**k surround an opening **16**f and are parallel to a width direction of the vehicle body (i.e., Y-axis). The back portion **16**p is parallel to the height direction of the vehicle body (i.e., X-axis). The back portion **16**p and the side portions **16**k are integrally formed and connected with a fillet (i.e., rounded corner) on an interior and exterior corner. The back portion **16**p and the side portions **16**k substantially have the thickness t**1**. The enlarged portions **16**h are formed at each end of the side portions **16**k and substantially has the width W.

The U-shape of **FIG.7F** may further improve the steering knuckle apparatus **1** and have similar beneficial effects of the exemplary embodiment of Figure **7A**.

According to the modifications above of the steering knuckle apparatus **1**, the modification may further enhance the strength of the second portion, reduce weight, improve rigidity, further suppress the deformation of the arm portion **1**a when the load acts on the arm portion **1**a, enhance mechanical strength, and reduce torsional stress.

### Modelling of arm portion and connecting portion

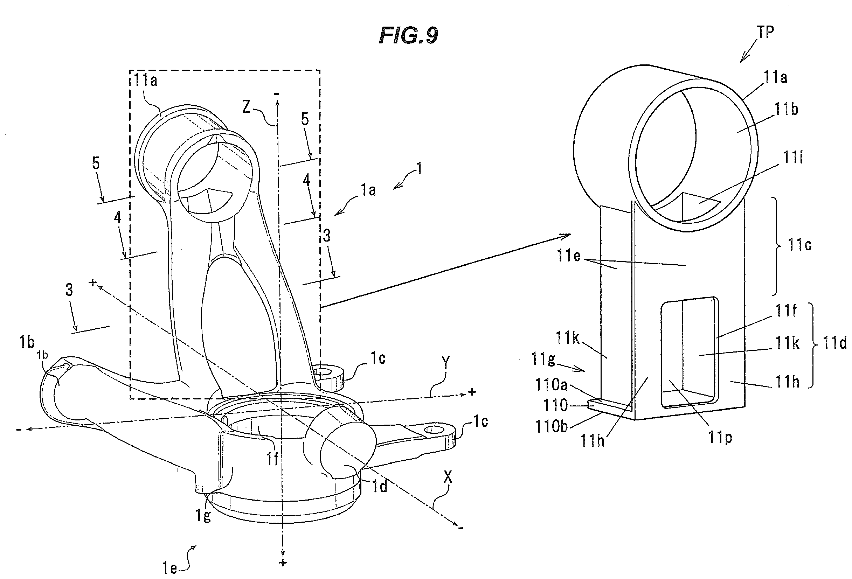

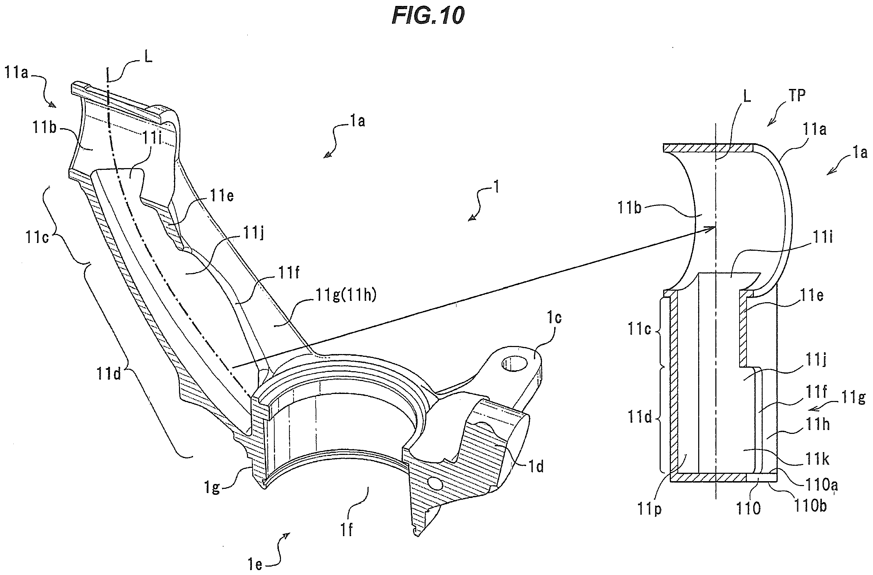

**FIG.9** and **FIG.10** are explanatory diagrams for explaining Examples in which the arm portion **1**a and the connecting portion **11**a of the vehicle steering knuckle **1** shown in **FIG.1** are simplified. A model TP in Example is a simplified model in which the outer periphery **1**g of the body section **1**e surrounded by a broken line in **FIG.9** is considered as a rigid body so that the arm portion **1**a and the connecting portion **11**a are simplified. According to the model TP in Example, the extending axis L is considered as a straight line and the peripheral wall **11**e of the first portion **11**c is considered to have a rectangular cross section, and a pair of side portions **11**k of the second portion **11**d are considered to be parallel with each other and perpendicular to the back portion **11**p as shown in **FIG.10**. Then, influences of the shape and the dimensions of the opening **11**f on the maximum principal stress and the weight are studied.

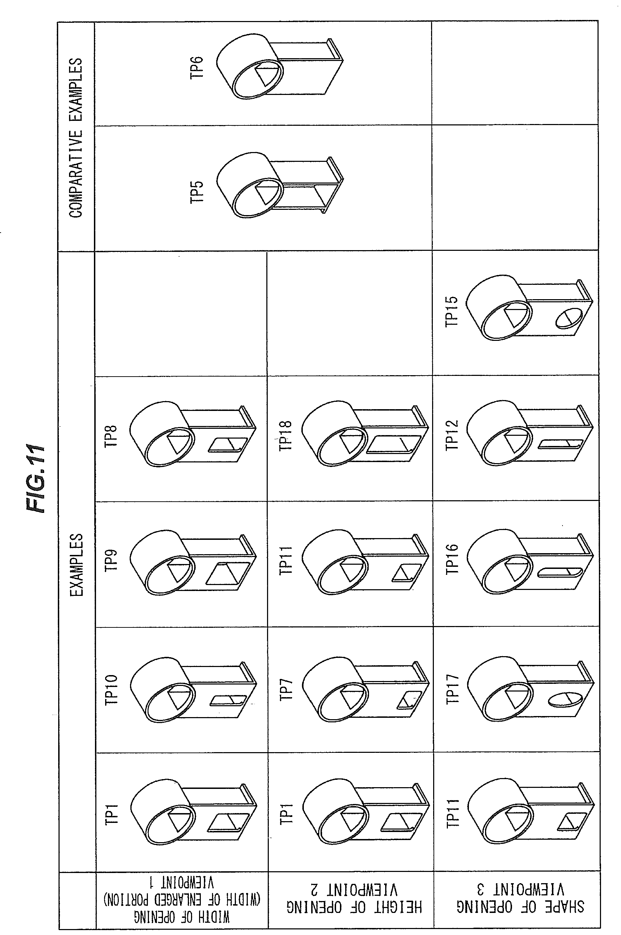

**FIG. 11** shows simplified models in Examples and comparative examples. In **FIG.11****,** TP**1**, TP**7** to TP**12**, and TP**15** to TP**18** are models of Examples whereas TP**5** and TP**6** are models of comparative examples. It should be noted that either or both of the models of Examples and comparative examples may be collectively referred to as "Model TP".

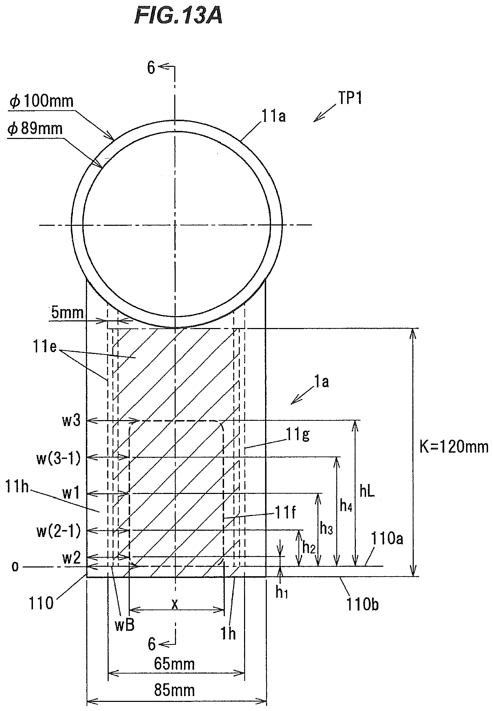

At first, with referring to **FIG.9** and **FIG.13A** to **FIG.13C****,** a common structure in the model TP for respective Examples and comparative examples will be described below. The height of all models TP is **220** mm. The connecting portion **11**a has a cylindrical shape with an outer diameter of 100 mm, an inner diameter (i.e., a diameter of the strut-attaching hole **11**b) of 89 mm, and a depth of 65 mm. The peripheral wall **11**g of the arm portion **1**a has a structure that two side portions **11**k are connected perpendicularly to the back portion **11**p and that the thickness t**1** of the back portion **11**p and the thickness of the side portions **11**k are equally 5 mm. One end portion of this peripheral wall **11**g is connected to a bottom portion **110** of the arm portion **1**a having a plate shape with a width of 85 mm, a depth of 55 mm, and a thickness of **5** mm, while the other end portion of the peripheral wall **11**g is connected perpendicularly to the center of a body part of the connecting portion **11**a having a cylindrical shape. When a minimum distance between the bottom portion **110** of the connecting portion **11**a and a lower surface **110**b of the arm portion **1**a-side edge is a height K of the arm portion **1**a, the value of K should be 120 mm because the value of K is a difference between 220 mm as the height of all the models TP and 100 mm as the outer diameter of the connecting portion **11**a. Also, inner walls of the connecting portion **11**a are connected to inner walls of the peripheral wall **11**g thereby form an upper opening **11**i.

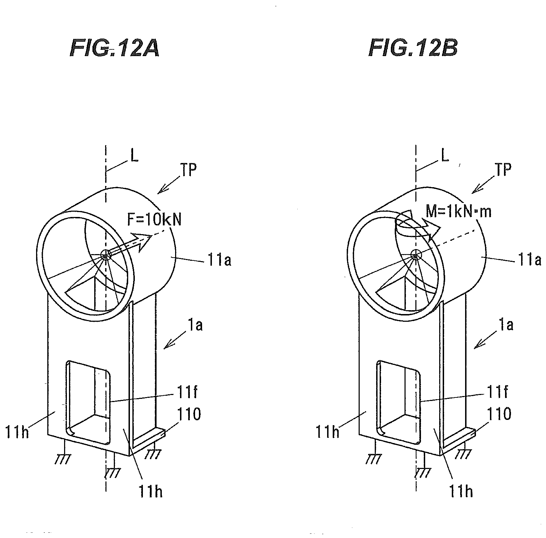

Also, the model TP is made of a spheroidal graphite cast iron material equivalent (specific gravity of 7.15 and Young's modulus of 170GPa). Next, the external force to be applied to the model TP will be described with referring to **FIG.12A** and **FIG.12B. FIG.12A** and **FIG.12B** are explanatory diagrams for showing the input position and directions of the external force for evaluating the model TP. The external forces applied to the model TP are an external force F and an external force M. The external force F is applied in a direction which is along a central axis of the connecting portion **11**a and directed from the opening **11**f-side toward the side opposite to the opening **11**f-side (translation direction) as shown in **FIG.12A****.** The external force M is applied in a direction around the extending axis L (rotation direction) as shown in **FIG.12B****.** The value of the external force F is 10kN and the value of the external force M is 1kN·m.

Next, the shape of the model of Example having the enlarged portion **11**h and the measuring position of the enlarged portion **11**h will be described below.

In each model TP, i.e., TP**1**, TP**7** to TP**12,** and TP**15** to TP**18** of Examples shown in **FIG.9****,** a peripheral wall **11**e is provided entirely at a perimeter in the first portion **11**c, which each model comprises a differently shaped opening **11**f and the enlarged portions **11**h provided on both sides of the opening **11**f in the second portion **11**d. Here, the width of the arm portion **1**a including the enlarged portions **11**h is 85 mm in all models of Examples, and the length of a portion of the enlarged portion **11**h extending outwardly from an outer circumference of the side portion **11**k is 10 mm. As shown in **FIG.13A****,** the thickness of the peripheral wall **11**e and the thickness of the enlarged portion **11**h are equally **5** mm in all models of Examples.

**FIGS.13A** to **13G** are explanatory diagrams for explaining the measuring position of the width of the enlarged portion **11**h in each model TP in Examples.

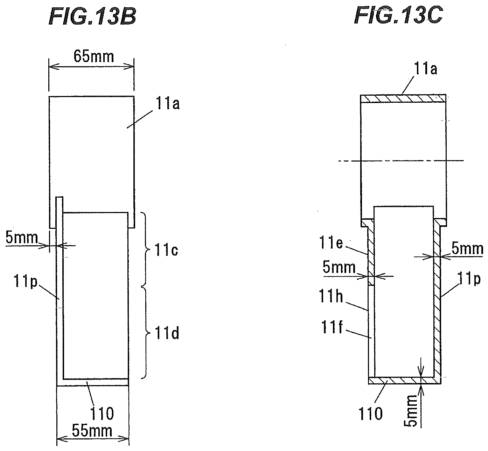

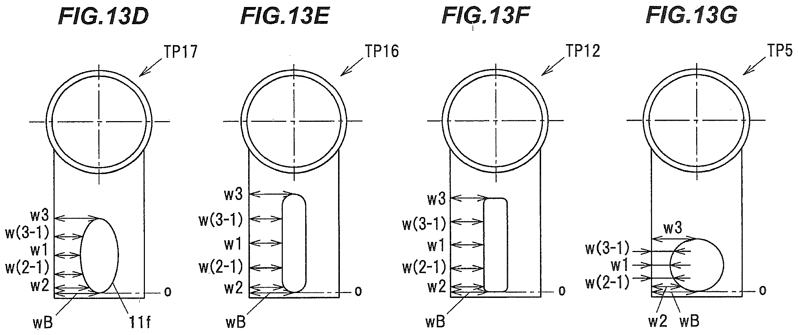

In view of the shape of the opening **11**f, **FIG.13A** shows the model TP**1** in which the opening **11**f has a short rectangular shape with fillets of a radius of 5 mm at four corners, **FIG.13B** shows a side view of the model TP1 in **FIG.13A****,** **FIG.13C** shows a **6-6** sectional view of the model TP**1** in **FIG.13A****,** **FIG.13D** shows the model TP**17** in which the opening **11**f has an elliptical shape, **FIG.13E** shows the model TP**16** in which the opening **11**f has an ellipsoidal shape (rectangular shape with round corners or oblong shape), **FIG.13F** shows the model TP**12** in which the opening **11**f has a long rectangular shape with fillets of a radius of 5 mm at four corners, and **FIG.13G** shows the model TP**15** in which the opening **11**f has a circular shape.

Here, a full length of the opening **11**f along the direction of the extending axis L, i.e., the height of the opening **11**f is hL (hereinafter referred to simply as "hL"), and a body section **1**e-side edge of the opening **11**f, i.e., the position where hL = 0 mm (at an upper surface **110**A of a bottom portion **110**) is a reference o, and a width of the opening **11**f at the reference o is wB.

### (Position of w1)

The measuring position of the width w**1** corresponding to width W**1** of the enlarged portion defined above in each Example of the model TP will be described below.

The width W**1** of the enlarged portion **11**h is defined as a width which is measured at the location nearest to a distal edge of the enlarged portion **11**h where the edge of the opening **11**f constitutes the outer surface of the arm portion **1**a. By applying this definition to each model TP in Examples, the width w**1** is unambiguously measured at the position h**3** where h**3**=hL/2 in TP**15** (**FIG.13E**) and TP**17** (**FIG.13D**) in which the opening **11**f has an elliptical shape and a circular shape, respectively. On the other hand, the width w**1** cannot be unambiguously measured at a specific position in TP**1** (**FIG.13A**) in which the opening **11**f has a short rectangular shape, TP**16** (**FIG.13E**) in which the opening **11**f has an ellipsoidal shape (rectangular shape with round corners or oblong shape), and TP**12 (****FIG.13F****)** in which the opening **11**f has a long rectangular shape, since the side along the extending axis L of the opening **11**f has a linear part so that the measuring position of the width W**1** can be measured at an arbitrary position of this linear part. Similarly, the width w**1** cannot be unambiguously measured at a specific position in TP**10**, TP**9**, TP**8**, TP**7**, TP**11,** and TP**18** in each of which the side along the extending axis L of the opening **11**f shown in **FIG.11** has a straight line. Therefore, in these Examples where the measuring position of the width W**1** cannot be unambiguously determined, the measuring position h**3** of the width w**1** is determined as the position h**3**=hL/**2**. The measuring position of this width w**1** is an example of the locations nearest to the distal edge of the enlarged portion where the edge of the opening constitutes the outer surface of the arm portion.

Next, referring to **FIG.13A**, w(**2-1**) corresponding to W(**2-1**), w**2** corresponding to W**2**, w(**3-1**) corresponding to W(**3-1**), and the measuring position of w**3** corresponding to W**3** in each Example of the model TP will be described below.

The following explanation is also applicable to the models TP of Examples as shown in **FIG.13B** to **FIG.13E****,** and the models TP of Examples which are not shown in **FIGS.13A** to **13E****.**

### (w(2-1) and measuring position of w2)

According to the aforementioned definition of the second width W**2**, in model TP, the measuring position corresponding to the middle position H**2** is h**2**(=h**3/2**) as shown in **FIG.13A****.** When the position of the body section **1**e-side edge is the reference o, a width w**2** should be a width of the enlarged portion at any location parallel to the width w**1** in a region extending from the reference o to the position h**2**. However, in the models TP, the width w**2** is a width of the enlarged portion **11**h which is measured at the position h**1** which is shifted from the reference o toward the position h**2** by **5** mm. Also, a width measured at the position h**2** and a width measured at the reference o are used as w(**2-1**) and wB, respectively.

The measuring position h**1** (i.e. 5 mm from the reference o) of this width w**2** is an example of the measuring positions of the second width measured near the body section according to the aforementioned definition of the second width W**2**. As long as it complies with the definition of the width W**2**, it is desirable to determine the measuring position h**1** in consideration of the position where stress concentration tends to occur. For example, the measuring position h**1** may be a position of an inflection point on a circumference of the opening **11**f. The measuring position h**1** may be a position distant by e.g. **5** mm from the reference o which is the measuring position of the width wB.

### (w(3-1) and measuring position of w3)

Similarly, in the model TP, a position corresponding to the middle position H**4** is h**4** (=(h**3**+hL)/**2**) according to the aforementioned definition of w**3** as shown in **FIG.13A****.** A width w**3** should be a width of the enlarged portion at any location parallel to the width w**1** in a region extending from the position h**4** to the position hL. However, in the models TP, the width w**3** is a width of the enlarged portion **11**h which is measured at the position hL. Also, the width of the position h**4** is calculated as w(**3-1**).

The measuring position hL of the width w**3** is an example of measuring positions according to the aforementioned definition of the third width W**3** measured near the connecting portion.

It should be noted that a relationship o <h**1** <h**2** <h**3** <h**4** <hL is established in the aforementioned explanation.

Next, models in the comparative examples will be described below. The model TP**5** in comparative example has a configuration that a front side part of the peripheral wall **11**e is not provided in the first portion **11**c and the enlarged portion **11**h is not provided in the second portion **11**d in the model TP shown in **FIG.9**. Therefore, model TP**5** of comparative example is the model TP having the smallest weight among all the models TP. In contrast, model TP**6** of comparative example has a configuration that the opening **11**f is not provided in the model TP shown in **FIG.9****.** Therefore, the model TP**6** of comparative example is the model TP having the largest weight among all the models TP.

The shape and the test conditions which are common to all the models TP are described above. Here, the influence of the shape and dimensions of the opening **11**f on the maximum principal stress and weight are studied from the first, second and third viewpoints.

### (The first viewpoint)

The first viewpoint is to study the relationship between the thickness t**1** of the side portion **11**k and the width w**1** of the enlarged portion **11**h when the height hL of the opening **11**f is constant (70 mm) but the maximum value x (hereinafter referred to as merely "x"), i.e., the width of the opening **11**f is varied.

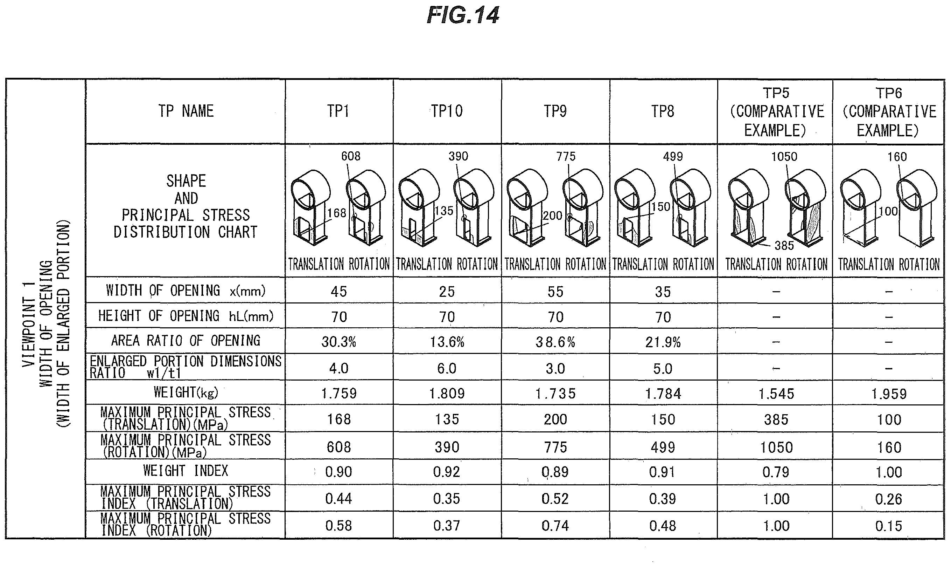

**FIG.14** is a table showing relations between respective parameters and the maximum principal stress and weight from the first viewpoint. Specifically, **FIG.14** shows the parameters such as x, hL, area ratio of opening (opening area ratio), enlarged portion dimensions ratio (w**1**/t**1**) of the opening **11**f, the weight, the value of maximum principal stress (translation) when the external force F of translation is input, and the value of maximum principal stress (rotation) when the external force M of rotation is input. It should be noted that the weight, the maximum principal stress (translation), and the maximum principal stress (rotation) may be called collectively as "measured values" (It is also applicable to the second viewpoint and the third viewpoint to be described later).

Further, in order to show the difference between the TP in Examples and TP in comparative example clearly, the maximum principal stress (translation) and the maximum principal stress (rotation) are shown together with the maximum principal stress index (translation) and the maximum principal stress index (rotation) the values of which are converted based on the values of maximum principal stress (translation) and the maximum principal stress (rotation) in TP**6** in comparative example being **1.00,** respectively, as a reference.

Further, the weight is shown together with the weight the value of which is converted based on the value of the weight in TP**5** in comparative example being 1.00, respectively, as a reference.

It should be noted that the weight index, the maximum principal stress index (translation), and the maximum principal stress index (rotation) may be called collectively as "index values" (It is also applicable to the second viewpoint and the third viewpoint to be described later).

In **FIG.14****,** the "area ratio of opening" (i.e. opening area ratio) means a percentage of an area of the opening **11**f to an area of hatched regions in the front view of the peripheral wall **11**e and the peripheral walls **11**g in **FIG.13A** (i.e., the product of a length between center positions of the peripheral walls **11**g and a height K of the arm portion **1**a) (It is also applicable to the second viewpoint).

In **FIG.14****,** "The enlarged portion dimensions ratio" (i.e. enlarged portion width/thickness ratio) means a proportion of the center width w**1** of the enlarged portion **11**h to the thickness t**1** of the side portion **11**k (hereinafter also referred to as "w**1**/t**1**") in **FIG.14****.**

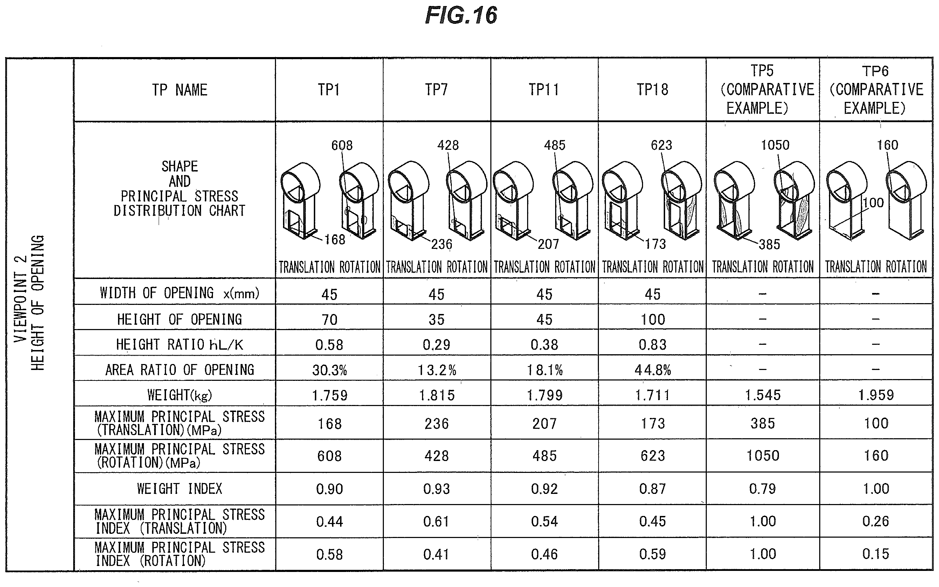

In **FIG.14****,** "the weight" means the weight of the arm portion **1**a and the connecting portion **11**a that are made of spheroidal graphite cast iron equivalent (specific gravity of 7.15) (It is also applicable to **FIG.16**).

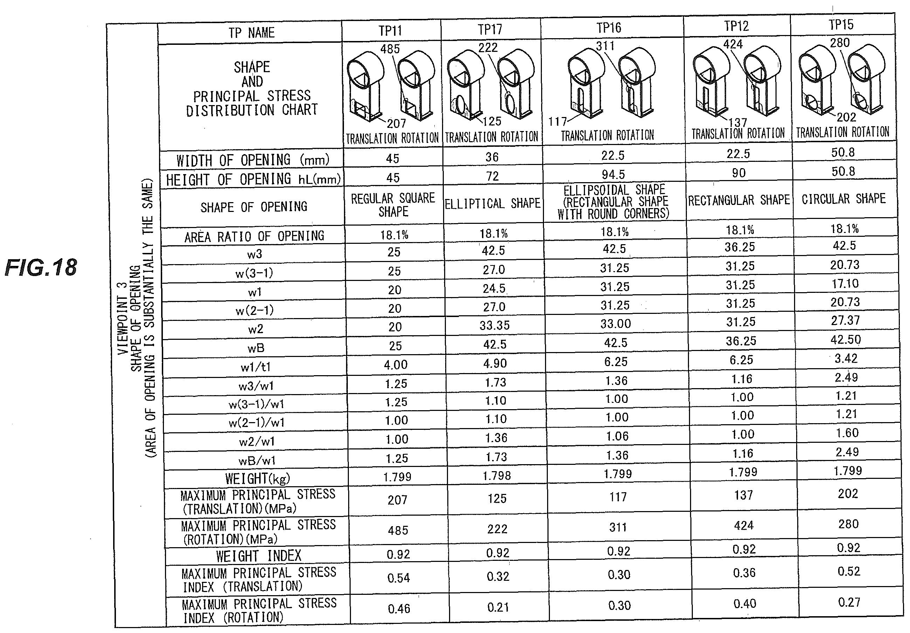

In **FIG.14****,** the "maximum principal stress (translation)" and the "maximum principal stress (rotation)" respectively mean the maximum principal stress values (unit: MPa) when the external forces F and M are applied along the directions described in **FIG.12A** and **FIG.12B** to the models made of the spheroidal graphite cast iron equivalent (Young's modulus of 170GPa) (It is also applicable to **FIG.16** and **FIG.18**).

Next, the values of the respective parameters, measured values and index values will be described below for each model TP.

### (TP1)

For Example TP**1** (x = 45 mm, w**1** = 20 mm, w**1**/t**1** = 4.0, and the opening area ratio = 30.3%), the evaluation results were: weight = 1.759 kg, weight index = 0.90, maximum principal stress (translation) = 168MPa, maximum principal stress index (translation) = 0.44, maximum principal stress (rotation) = 608MPa, maximum principal stress index (rotation) = 0.58.

### (TP10)

For Example TP**10** (x = 25 mm, w**1** = 30 mm, w**1**/t**1** = 6.0, and opening area ratio = 13.6%), the evaluation results were: weight = 1.809 kg, weight index = 0.92, maximum principal stress (translation) = 135MPa, maximum principal stress index (translation) = 0.35, maximum principal stress (rotation) = 390MPa, and maximum principal stress index (rotation) = 0.37.

### (TP9)

For Example TP**9** (x = 55 mm, w**1** = 15 mm, w**1**/t**1** = 3.0, opening area ratio = 38.6%), the evaluation results were: weight = 1.735 kg, weight index = 0.89, maximum principal stress (translation) = 200MPa, maximum principal stress index (translation) = 0.52, maximum principal stress (rotation) = 775MPa, and maximum principal stress index (rotation) = 0.74.

### (TP8)

For Example TP**8** (x = 35 mm, w**1** = 25 mm, w**1**/t**1** = 5.0, opening area ratio = 21.9%), the evaluation results were: weight = 1.784 kg, weight index = 0.91, maximum principal stress (translation) = 150MPa, maximum principal stress index (translation) = 0.39, maximum principal stress (rotation) = 499MPa, and maximum principal stress index (rotation) = 0.48.

### (TP5)

For the comparative example TP**5**, the evaluation results were: weight = 1.545 kg, weight index = 0.79, maximum principal stress (translation) = 385MPa, maximum principal stress index (translation) = 1.00, maximum principal stress (rotation) = 1050MPa, and maximum principal stress index (rotation) = 1.00.

### (TP6)

For the comparative example TP**6**, the evaluation results is weight = 1.959 kg, weight index = 1.00, maximum principal stress (translation) = 100MPa, maximum principal stress index (translation) = 0.26, maximum principal stress (rotation) = 160MPa, and maximum principal stress index (rotation) = 0.15.

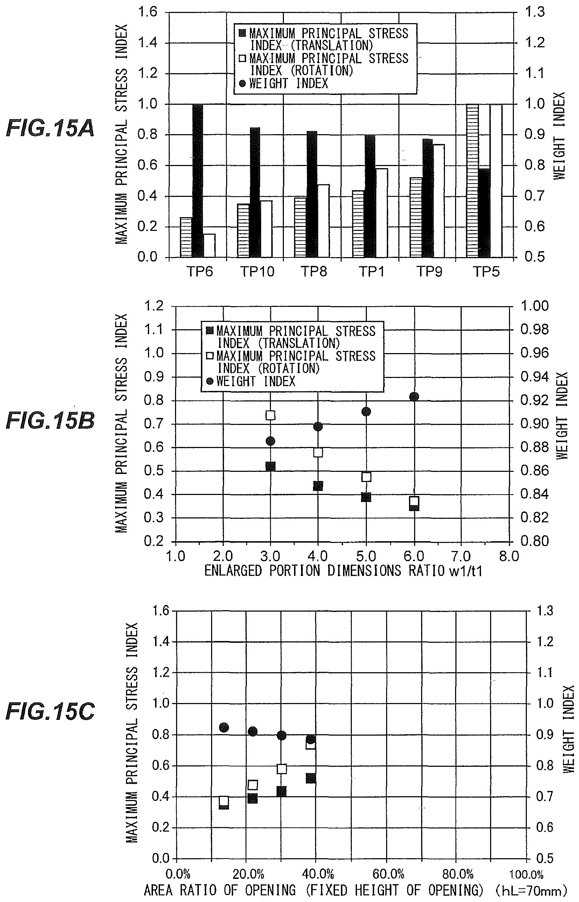

**FIG.15A** to **FIG.15C** show graphs showing evaluation results from the first viewpoint as shown in **FIG. 14**.

**FIG.15A** shows graphs representing the index value of each model TP. The weight index values of TP**10**, TP**8**, TP**1**, and TP**9** fall between the value of comparative example TP**6** and the value of comparative example TP**5**.

Both the values of the maximum principal stress index (translation) and the maximum principal stress index (rotation) of TP**10,** TP**8**, TP**1**, and TP**9** fall between the value of the comparative example TP**6** and the values of the comparative example TP**5**.

Thus, in each of Example TP**10**, TP**8**, TP**1**, and TP**9**, the maximum principal stress was suppressed to be smaller than the comparative example TP**5**, and the weight was smaller than comparative example TP**6**.

In other words, it is confirmed that Example TP**10**, TP**8**, TP**1**, and TP**9** are superior in the maximum principal stress and the weight, namely, the balance between the strength security and the weight reduction, to the comparative example TP**5** and TP**6**.

**FIG.15B** shows graphs representing the relationship between the enlarged portion dimensions ratio (w**1**/t**1**) and the index value in each Example TP.

As clearly understood from **FIG.15B****,** it is confirmed that, in accordance with the increase in the enlarged portion dimensions ratio, both the maximum principal stress index (translation) and the maximum principal stress index (rotation) decrease while the weight index increases. On one hand, when the enlarged portion dimensions ratio is 2.0 or more, the maximum principal stress index (rotation) is 0.85 or less. On the other hand, when the enlarged portion dimensions ratio is 7.0 or less, the maximum principal stress index (rotation) is 0.95 or less. That is, the enlarged portion dimensions ratio is preferably from 2.0 to 7.0, since both the maximum principal stress and the weight can be suppressed relatively small and so that the deformation and damage of the arm portion can be further suppressed and that the degree of the weight reduction can be improved.

**FIG.15C** shows graphs representing relationship between the opening area ratio and the index value of each Example TP.

As clearly understood from **FIG.15C****,** in accordance with the increase of the opening area ratio within a range from 10% to 40%, the weight index decreases while both the maximum principal stress index (translation) and the maximum principal stress index (rotation) increase.

### (The second viewpoint)

The second viewpoint is to study the effect of varying the opening area ratio by varying a proportion of the height hL of the opening **11**f to the height K (120 mm) of the arm portion **1**a (hereinafter referred to as "opening height ratio" or "hL/K" by keeping the maximum value x of the width of the rectangular opening **11**f constant (45 mm) while changing the height hL of the opening **11**f.

Next, the values of the respective parameters, measured values and index values will be described below for each model TP. The descriptions of the comparative examples TP**5** and TP**6** are omitted since they are already described in the explanation of the first viewpoint.

### (TP1)

For Example TP**1** (hL = 70 mm, hL/K = 0.58, and opening area ratio = 30.3%), the evaluation results were: weight = 1.759 kg, weight index = 0.90, maximum principal stress (translation) = 168MPa, maximum principal stress index (translation) = 0.44, maximum principal stress (rotation) = 608MPa, and maximum principal stress index (rotation) = 0.58.

### (TP7)

For Example TP**7** (hL = 35 mm, hL/K = 0.29, and opening area ratio = 13.2%), the evaluation results were: weight = 1.815 kg, weight index = 0.93, maximum principal stress (translation) = 236MPa, maximum principal stress index (translation) = 0.61, maximum principal stress (rotation) = 428MPa, and maximum principal stress index (rotation) = 0.41.

### (TP11)

For Example TP**11** (hL = 45 mm, hL/K = 0.38, and opening area ratio = 18.1%), the evaluation results were weight = 1.799 kg, weight index = 0.92, maximum principal stress (translation) = 207MPa, maximum principal stress index (translation) = 0.54, maximum principal stress (rotation) = 485MPa, and maximum principal stress index (rotation) = 0.46.

### (TP18)

For Example TP**18** (hL = 100 mm, hL/K = 0.83, opening area ratio = 44.8%), the evaluation results were: weight = 1.711 kg, weight index = 0.87, maximum principal stress (translation) = 173MPa, maximum principal stress index (translation) = 0.45, maximum principal stress (rotation) = 623MPa, and maximum principal stress index (rotation) = 0.59.

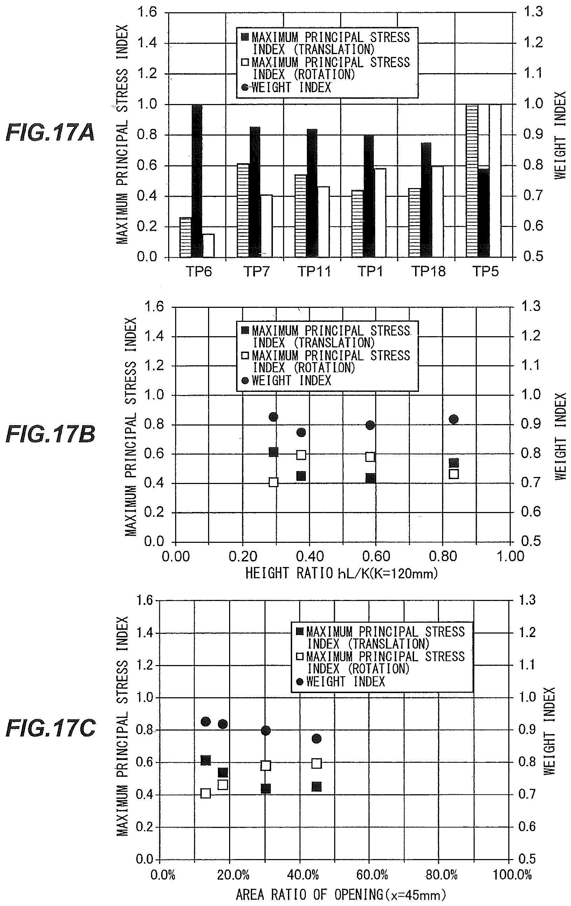

**FIG.17A** to **FIG.17C** show graphs showing evaluation results from the second viewpoint as shown in **FIG.16****.**

**FIG.17A** shows graphs representing the index value of each model TP. The weight index values of TP**1**, TP**7**, TP**11**, and TP**18** fall between the value of comparative example TP6 and the value of comparative example TP**5**.

Both the values of the maximum principal stress index (translation) and the maximum principal stress index (rotation) of TP**1**, TP**7**, TP**11**, and TP**18** fall between the value of the comparative example TP**6** and the values of the comparative example TP**5**.

Thus, in each of Example TP**1**, TP**7**, TP**11**, and TP**18**, the maximum principal stress was suppressed to be smaller than the comparative example TP5, and the weight was smaller than comparative example TP**6**.

In other words, it is confirmed that Example TP**1**, TP**7**, TP**11**, and TP**18** are superior in the maximum principal stress and the weight, namely, the balance between the strength security and the weight reduction, to the comparative example TP**5** and TP**6**, so that the deformation and damage of the arm portion can be further suppressed and that the degree of the weight reduction can be improved.

**FIG.17B** shows graphs representing relations between the opening height ratio (hL/K) and the index value of each Example TP.

As clearly understood from **FIG.17B****,** when hL/K is from 0.29 to 0.83, both the maximum principal stress index (rotation) and the maximum principal stress index (translation) are suppressed to be **0.6** or less, and the weight index is also suppressed to be 0.95 or less. It is confirmed that the deformation and damage of the arm portion can be further suppressed and that the degree of the weight reduction can be improved.

**FIG.17C** shows graphs representing relations between the opening area ratio and the index value of each Example TP.

As clearly understood from **FIG.17C****,** when the opening area ratio is 10% or more, the weight index is 0.95 or less, namely, the weight reduction of 5% or more can be achieved and the maximum principal stress index (translation) is 0.7 or less. Further, when the opening area ratio is up to 30%, the maximum principal stress index (translation) is rather reduced to 0.44. Even though the opening area ratio increases to 45%, the maximum principal stress index (translation) is 0.45, namely, hardly increases.

On the other hand, when the opening area ratio is 30%, the maximum principal stress index (rotation) increases up to 0.58. Even though the opening area ratio increases up to 45%, the maximum principal stress index (rotation) is 0.59, namely, hardly increases and not greater than 0.6.

Accordingly, it is confirmed that the opening area ratio is preferably between 10 and 80% in order to achieve the weight index being 0.95 or less and both the maximum principal stress index (translation) and the maximum principal stress index (rotation) being 0.7 or less. When the opening area ratio is less than 10%, a percentage of the weight of the connecting portion **11**a and the arm portion **1**a to the weight of these portions of the model having no opening **11**f exceeds 95%, namely, the weight reduction percentage remains less than 5%. Therefore, it is not preferable. On the other hand, when the opening area ratio exceeds 80%, the percentage of the maximum principal stress index (translation) or maximum principal stress index (rotation) to that of the model having no enlarged portion **11**h exceeds 85%, namely, the stress reduction effect remains less than 15%. Therefore, it is not preferable. The opening area ratio is more preferably from 10 to 60%, even preferably from 15 to 60%, and most preferably from 20 to 60%.

From the comparison between **FIG.17C** showing graphs representing the results in which x=45 mm is fixed and **FIG.15C** showing graphs representing the result in which hL=70 mm is fixed from the first viewpoint, it is confirmed that the degree of the increase in the maximum principal stress index (translation) and the maximum principal stress index (rotation) in accordance with the increase of the opening area ratio in **FIG.17C** is suppressed to be smaller than that in **FIG.15C****.** From the first viewpoint, it means that the increase of the opening area ratio by the increase of the maximum value x of the width of the rectangular opening **11**f can increase the enlarged portion dimensions ratio w**1**/t**1** at the same time. In contrast, from the second viewpoint, the opening area ratio is changed while the enlarged portion dimensions ratio w**1**/t**1** is kept constant. Thus, it is confirmed that, in the case of reducing the weight by increasing the opening area ratio, it is preferable to increase the height of the opening, i.e., increasing the opening height ratio while maintaining the enlarged portion dimensions ratio w**1**/t**1** as large as possible rather than reducing the enlarged portion dimensions ratio w**1**/t**1**, since both the increase of the maximum principal stress (translation) and the increase of the maximum principal stress (rotation) can be suppressed.

### (The third viewpoint)

The third viewpoint is to study the relationship and effect of w**2** and w**3** to w**1** with keeping the area of the opening **11**f constant while changing the shape of the opening **11**f

**FIG.18** shows the values of the respective parameters, measured values and index values from the third viewpoint.

Specifically, the parameters are: x and hL of the opening **11**f, widths w**3**, w(**3-1**), w**1**, w (**2-1**), w**2**, and wB of the enlarged portion **11**h, width proportions w**3**/w**1**, w(**3-1**)/w**1**, w(**2-1**)/w**1**, w**2**/w**1,** and wB/w**1** of the enlarged portion **11**h. Here, the opening area ratio of the opening **11**f is 18.1% which is the same as the opening area ratio in TP**11** shown in the description of the second viewpoint.

Next, the values of the respective parameters, measured values and index values will be described below for each model TP. The descriptions of the comparative examples TP**5** and TP**6** are omitted since they are already described in the explanation of the first viewpoint.

### (TP11)

For Example TP**11** with the opening **11**f having a regular square shape in which fillets with a radius of 5 mm are provided at four corners (x = 45 mm, hL = 45 mm, w**3** = 25 mm, w(**3-1**) = 25 mm, w**1** = 20 mm, w(**2-1**) = 20 mm, w**2** = 20 mm, wB = 25 mm, w**1**/t**1** = 4.00, w**3**/w**1** = 1.25, w(**3-1**)/w**1** = 1.25, w(**2-1**)/w**1** = 1.00, w**2**/w**1** = 1.00, wB/w**1** = 1.25), the evaluation results were: weight = 1.799 kg, weight index = 0.92, maximum principal stress (translation) = 207MPa, maximum principal stress index (translation) = 0.54, maximum principal stress (rotation) = 485MPa, maximum principal stress index (rotation) = 0.46.

### (TP17)

For Example TP**17** with the opening **11**f having an elliptical shape (x = 36 mm, hL = 72 mm, w**3** = 42.5 mm, w(**3-1**) = 27.0 mm, w**1** = 24.5 mm, w(**2-1**) = 27.0 mm, w**2** = 33.35 mm, w**B** = 42.5 mm, w**1**/t**1** = 4.90, w**3**/w**1** = 1.73, w(**3-1**)/w**1** = 1.10, w(**2-1**)/w**1** = 1.10, w**2**/w**1** = 1.36, wB/w**1** = 1.73, weight = 1.798 kg, weight index = 0.92, maximum principal stress (translation) = 125MPa, maximum principal stress index (translation) = 0.32, maximum principal stress (rotation) = 222MPa, and maximum principal stress index (rotation) = 0.21.

### (TP16)

For Example TP**16** with the opening **11**f having an ellipsoidal shape (rectangular shape with round corners in which each short side has a semi-circular shape) (x = 225 mm, hL = 94.5 mm, w**3** = 42.5 mm, w(**3-1**) = 31.25 mm, w**1** = 31.25 mm, w(**2-1**) = 31.25 mm, w**2** = 33.00 mm, wB = 42.5 mm, w**1**/t**1** = 6.25, w**3**/w**1** = 1.36, w(**3-1**)/w**1** = 1.00, w(**2-1**)/w**1** = 1.00, w**2**/w**1** = 1.06, and wB/w**1** = 1.36), the evaluation results were weight = 1.799 kg, weight index = 0.92, maximum principal stress (translation) = 117MPa, maximum principal stress index (translation) = 0.30, maximum principal stress (rotation) = 311MPa, and maximum principal stress index (rotation) = 0.30.

### (TP12)

For Example TP**12** with the opening **11**f having a rectangular shape in which fillets with a radius of **5** mm are provided at four corners (x = 22.5 mm, hL = 90 mm, w**3** = 36.25 mm, w(**3-1**) = 31.25 mm, w**1** = 31.25 mm, w (**2-1**) = 31.25 mm, w**2** = 31.25 mm, wB = 36.25 mm, w**1**/t**1** = 6.25, w**3**/w**1** = 1.16, w(**3-1**)/w**1** = 1.00, w(**2-1**)/w**1** = 1.00, w**2**/w**1** = 1.00, wB/w**1** = 1.16), the evaluation results were: weight = 1.799 kg, weight index = 0.92, maximum principal stress (translation) = 137MPa, maximum principal stress index (translation) = 0.36, maximum principal stress (rotation) = 424MPa, and maximum principal stress index (rotation) = 0.40.

### (TP15)

For Example TP**15** with the opening **11**f having a circular shape (x = 50.8 mm, hL = 50.8 mm, w**3** = 42.5 mm, w (**3-1**) = 20.73 mm, w**1** = 17.10 mm, w(**2-1**) = 20.73 mm, w**2** = 27.37 mm, wB = 42.50 mm, w1/t1 = 3.42, w3/w1 = 2.49, w(3-1)/w1 = 1.21, w(2-1)/w1 = 1.21, w2/w1 = 1.60, wB/w1 = 2.49), the evaluation results were: weight = 1.799 kg, weight index = 0.92, maximum principal stress (translation) = 202MPa, maximum principal stress index (translation) = 0.52, maximum principal stress (rotation) = 280MPa, and maximum principal stress index (rotation) = 0.27.

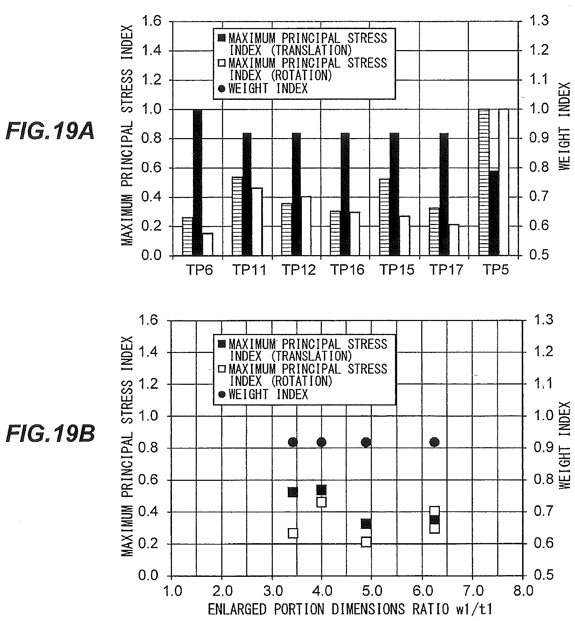

FIGS.19A to 19D show the evaluation results to the models from the third viewpoint.

**FIG.19A** shows graphs representing the index values of each model TP.

In each of TP**11,** TP**12**, TP**16**, TP**15**, and TP**17,** both the maximum principal stress index (translation) and the maximum principal stress index (rotation) are smaller than those in TP**5**, and the weight index is smaller than that in TP**6**. That is, TP**11,** TP**12**, TP**16,** TP**15**, and TP**17** are superior in the balance between the maximum principal stress and the weight, namely, the balance between the strength security and the weight reduction, to TP**5** and TP**6**.

As to the comparison in maximum principal stress index (rotation), with respect to TP**11,** the value is reduced in the order of TP**12**, TP**16,** TP**15**, and TP**17**. Particularly, the value of TP**17** with the opening **11**f having the ellipsoidal shape (rectangular shape with round corners in which short side is semi-circular), the value of TP**16** with the opening **11**f having an elliptical shape, and the value of TP**15** with the opening **11**f with a circular shape are small so that these shapes are preferable. That is, it is preferable that the shape of the opening **11**f is rounded or curved as compared with the rectangular shape such as TP**11** and TP**12.** In addition, as a result of comparison in maximum principal stress index (translation), it is confirmed that the ellipsoidal (rectangular shape with round corners or oblong) and elliptical shapes of the opening **11**f are more preferable as in TP**16** and TP**17** are more preferable than the circular shape of the opening **11**f in TP**15**.

**FIG.19B** shows graphs representing the relationship between the enlarged portion dimensions ratio and the index value.

The weight index is 0.92 in all of TP**11**, TP**12,** TP**16**, TP**15**, and TP**17**, since the area of the opening **11**f is the same. The maximum principal stress index (translation) and the maximum principal stress index (rotation) is 0.6 or less in all of TP**11**, TP**12**, TP**16**, TP**15**, and TP**17** within the range from 3.42 to 6.25 which is the value of w**1**/t**1** of these Examples.

Here, **FIG.19B** is compared with **FIG.15B** in which the opening **11**f has the rectangular shape from the first viewpoint.

In **FIG.15B****,** when w**1**/t**1** is 3.5 or less, the value of the maximum principal stress index (rotation) may exceed 0.6. In **FIG.19B****,** for example, when the opening **11**h has a circular shape and w**1**/t**1** is 3.42 as in TP**15**, the value of the maximum principal stress index (rotation) is 0.27. Thus, it is confirmed that the value of the maximum principal stress index (rotation) can be greatly suppressed in comparison with the maximum principal stress index (rotation) of the model having the same enlarged portion dimensions ratio as in **FIG.15B****.**

Thus, it is confirmed that it is preferable to change the shape of the opening **11**h, thereby remarkably suppressing, in particular, the value of maximum principal stress index (rotation). More particularly, in TP**17** in which w**1**/t**1** is 4.90, the maximum principal stress index (translation) is 0.32, which is next to TP**16** in which the maximum principal stress index (translation) is 0.30, and the maximum principal stress index (rotation) is 0.21 which is the smallest value. The maximum principal stress index (translation) and the maximum principal stress index (rotation) in TP**17** are remarkably smaller than the maximum principal stress index (translation) of 0.39 and the maximum principal stress index (rotation) of .0.48 in TP**8** (w**1**/t**1** = 5.0, and weight index=0.91) having the same enlarged portion dimensions ratio in **FIG.15B****.**

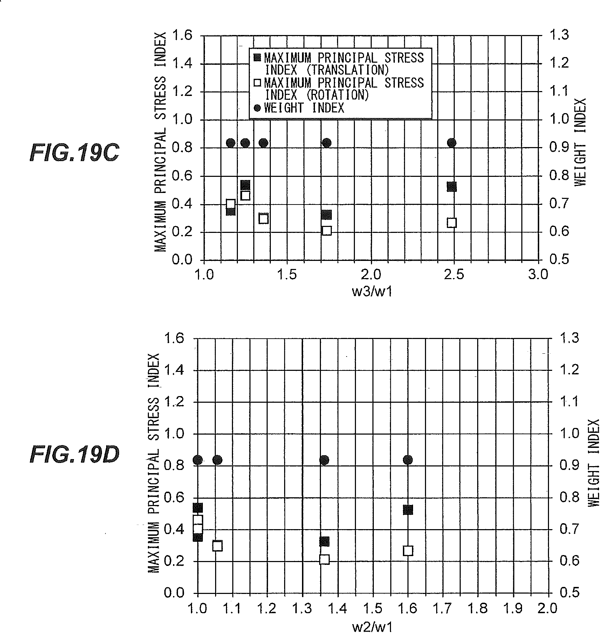

**FIG.19C** shows graphs representing the relationship between w**3**/w**1** and the index value. It is confirmed that w**3**/w**1** preferably is 1.1 or more but 2.6 or less, since both the maximum principal stress index (translation) and the maximum principal stress index (rotation) can be suppressed to be 0.6 or less.

**FIG.19D** shows graphs representing the relationship between w**2**/w**1** and the index value. It is confirmed that w**2**/w**1** preferably is 1.1 or more but 1.7 or less, since both the maximum principal stress index (translation) and the maximum principal stress index (rotation) can be suppressed to be 0.6 or less.

As described above, from the third viewpoint, the model for suppressing the maximum principal stress index (translation) and the maximum principal stress index (rotation) at the best balance is TP**17** with the opening **11**f having an elliptical shape. The second best models are TP**16** with the opening **11**f having the ellipsoidal shape (rectangular shape with round corners in which short side is semi-circular or oblong shape) and TP**16** with the opening **11**f having a circular shape. Therefore, the shape of the opening **11**f is preferably a round or curved shape than a rectangular shape, more preferably ellipsoidal shape (rectangular shape with round corners in which short side is semi-circular or oblong shape) rather than a circular shape, even preferably an elliptical shape. In particular, the opening **11**f has an elliptical shape in which a length of the opening **11**f along the extending axis L is between 1.2 and 3 times greater than a length of the opening **11**f along a direction intersecting the extending axis L.

It should be noted that, in an application to a real vehicle steering knuckle, the arm portion **1**a in the first exemplary embodiment curves along the extending axis L as shown in e.g. **FIG.1****.** The shape of the opening **11**f in such a configuration viewed from the direction in which an area of the opening **11**f becomes the maximum when the arm portion **1**a is viewed perpendicularly to the extending axis L.

Also, due to restrictions in production or other limitations, the opening **11**f may not have a simple elliptical shape. In particular, the body section **1**e-side portion of the opening **11**f may have a substantially rectangular shape, which is advantageous in easy formation of the hollow portion **11**j and weight reduction. Also, the connecting portion **11**a-side portion of the opening **11**f may have a substantially parabolic shape.

Next, the measuring results of the maximum principal stress in the arm portion **1**a when the load is applied thereto in a vehicle steering knuckle **1** having the enlarged portion shown in **FIG.1** as Example **1** and in a vehicle steering knuckle having no enlarged portion as a comparative example **1** will be described below. Here, in the comparative example **1**, not only the enlarged portion **11**h is absent but also the part corresponding to the first portion **11**c in Example **1** is opened. The comparative example **1** has a configuration similar to Example **1** except the above differences. Further, both Example **1** and comparative example **1** are made of cast iron equivalent (specific gravity of 7.15, Young's modulus of 170GPa).

### (Enlarged portion)

Table **1** shows parameters W**1**/t**1**, W**3**/W**1** and W**2**/W**1** in the arm portion **1**a of the vehicle steering knuckle **1** (Example **1**) having the enlarged portion shown in **FIG.5****.**

**[Table 1]**

| Parameters | Upper part of **FIG.5** (Y(-) side of **FIG.1**) | Lower part of **FIG.5** (Y(+) side of **FIG.1** |
|---|---|---|
| W**1**/t**1** | 3.70 | 3.00 |
| W**3**/W**1** | 1.80 | 2.15 |
| W**2**/W**1** | 1.55 | 1.35 |

### (Opening area ratio and opening height ratio)

In Example **1,** the opening **11**f is provided. As to the shape of the opening **11**f, the connection portion **11**a-side portion with respect to the position W**1** has a substantially parabolic shape and the body section **1**e-side portion with respect to the position W**1** has a substantially rectangular shape.

The "opening area ratio" is a value derived by dividing an "area of the opening **11**f" by an "area of the opening **11**f-side region (i.e. a region on a side of the opening **11**f)" of the arm portion **1**a.

Here, the "area of the opening **11**f-side region" is calculated as an area of an inner region defined by a projected line (broken line of **FIG.1**) of a center of the thickness of peripheral walls (**11**e, **11** g) of the arm portion **1**a on opening side wall (**11**e, **11**h) of the arm portion **1**a having the opening **11**f and another projected line of a line intersecting the extending axis L and contacting the connecting portion **11**a on the opening side walls (**11**e, **11**h), when viewed from the direction, in which the area of the opening **11**f becomes the maximum when the arm portion **1**a is viewed perpendicularly to the extending axis L (hereinafter also referred to as "measuring direction").

Further, the "area of the opening **11**f" is an area of the opening **11**f when viewed from the measuring direction.

In Example **1**, the "opening area ratio" of the opening **11**f shown in **FIG.1** was 55.0%. The opening height ratio defined in the description as to the second viewpoint was 80%

### (Test condition)

Returning to **FIG.6****,** test condition will be described below.

A center Ps of the body section **1**e was restricted in both Example **1** and the comparative example **1.** At this time, the body section **1**e was also restricted not to rotate around Z-axis. A load point Pf was distant from the center Ps by a length E which is **3** times longer than a length of the arm portion **1**a. Because the load F**3** is applied in Y-axis (-) direction (the front direction perpendicular to a sheet surface) and comprised of a component of a force twisting the arm portion **1**a, the maximum principal stress by the load F**3** may be referred to as "maximum principal stress (rotation)" hereinafter. The value of the load F**3** was 4kN.

Also, because load F**4** is applied in Z-axis (-) direction and consisted of a component of force pressing the arm portion **1**a, and the load F**4** does not include a component of a force twisting the arm portion **1**a, the maximum principal stress by the load F**4** may be referred to as "maximum principal stress (translation)" hereinafter. The value of the load F**4** was 4kN.

### (Maximum principal stress (translation))

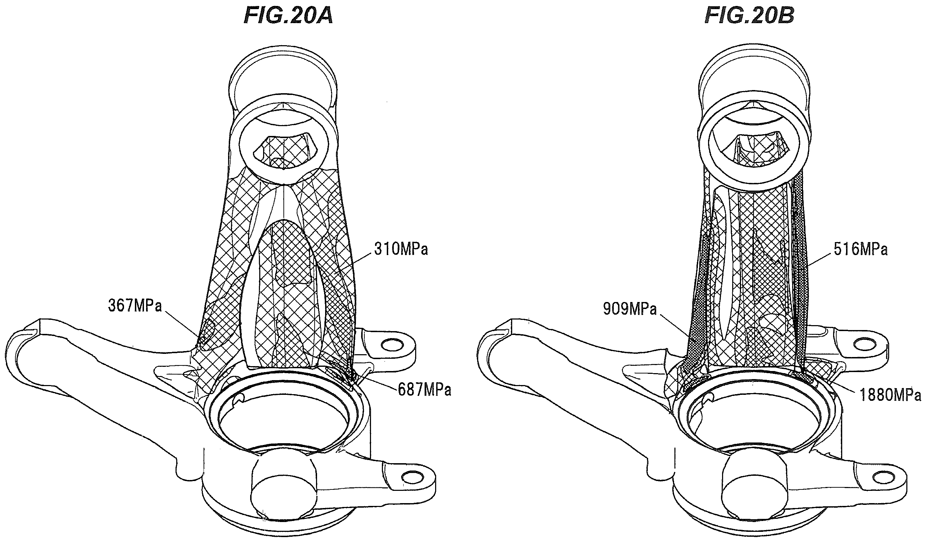

At first, the result that the load F**4** is input is shown. **FIG.20A** is a chart showing the measurement results of the maximum principal stress (translation) in the arm portion **1**a in Example **1.** The shape of the opening **11**f in Example **1** is a shape which is close to the elliptical shape of the opening in model TP**17** as described above from the third viewpoint. On the other hand, **FIG.20B** is a chart showing the measurement results of the maximum principal stress (translation) of the comparative example **1** having no enlarged portion **11**h as compared to the vehicle steering knuckle **1** as shown in **FIG.1****,** which corresponds to the model TP5 as described above from the first and second viewpoints.

In the comparative example **1** having no enlarged portion **11**h, the maximum principal stress (translation) was 1880MPa. On the other hand, in Example **1** having the enlarged portion **11**h, the maximum principal stress (translation) was 687MPa.

A ratio of the maximum principal stress index (translation) of Example **1** to that of the comparative example **1** is 0.37:1.00, i.e. the maximum principal stress index (translation) of Example **1** is reduced to be approximately 1/2.7 of the comparative example **1**.

### (Maximum principal stress (rotation))

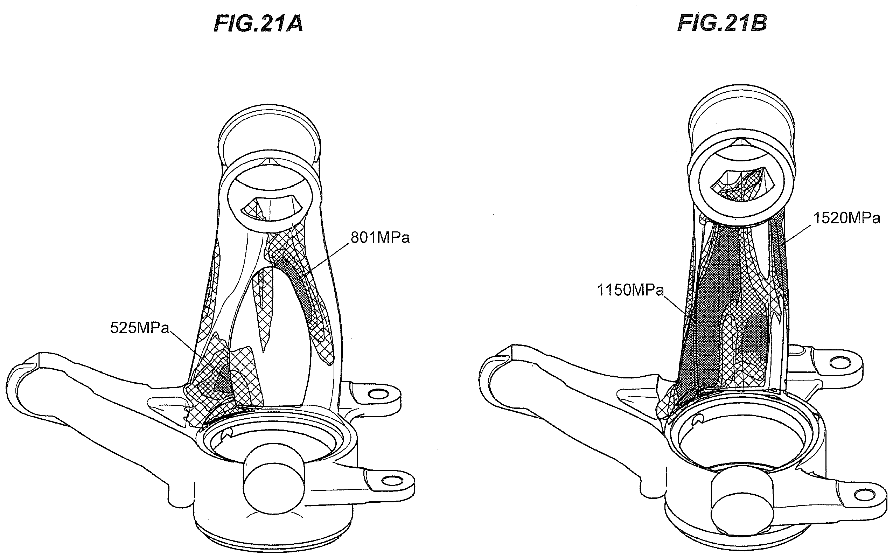

Then, the result that the load F**3** is applied is shown. **FIG.21A** is a chart showing the measurement results of the maximum principal stress (rotation) in the arm portion **1**a in Example **1**. **FIG.21B** is a chart showing the measurement results of the maximum principal stress (rotation) of the comparative example **1**.

In the comparative example **1** having no enlarged portion **11**h, the maximum principal stress (rotation) was 1520MPa. On the other hand, in Example **1** having the enlarged portion **11**h, the maximum principal stress (rotation) was 801MPa.

A ratio of the maximum principal stress index (rotation) of Example **1** to that of the comparative example **1** is 0.53:1.00, i.e. the maximum principal stress index (rotation) of Example **1** is reduced to be approximately 1/1.9 of the comparative example **1**.

Although the invention has been described with respect to the specific embodiment for complete and clear disclosure, the appended claims are not to be therefore limited but are to be construed as embodying all modifications and alternative constructions that may occur to one skilled in the art which fairly fall within the basic teaching herein set forth.

Further, Applicant's intent is to encompass the equivalents of all claim elements, and no amendment to any claim of the present application should be construed as a disclaimer of any interest in or right to an equivalent of any element or feature of the appended claims.

### 1 Vehicle steering knuckle

- **1**a: Arm portion
- **1**b: Tie rod arm portion
- **1**c: Brake arm portion
- **1**d: Lower control arm-attaching arm
- **1**e: Body section
- **1**f: Axil attaching hole
- **1**g: Outer periphery
- **3-3**: Arrow
- **4-4**: Arrow
- **5-5**: Arrow
- **6-6**: Arrow
- **11**a: Connecting portion
- **11**b: Strut attaching hole
- **11**c: First portion
- **11**d: Second portion
- **11**e: Peripheral wall
- **11**f: Opening
- **11**g: Peripheral wall
- **11**h: Enlarged portion (Edge of side portion)
- **11**h**1**: Outer surface
- **11**i: Upper opening
- **11**j: Hollow portion
- **11**k: Side portion
- **11**m, **11**n: Surface
- **11**o: Round portion
- **11**p: Back portion
- **12**d: Second portion
- **12**g: Peripheral wall
- **12**h: Enlarged portion
- **12**k: Side portion
- **13**d: Second portion
- **13**g: Peripheral wall
- **13**h: Enlarged portion
- **13**k: Side portion
- **14**d: Second portion
- **14**g: Peripheral wall
- **14**h: Enlarged portion
- **14**k: Side portion
- **14**p: Back portion
- **15**d: Second portion
- **15**f: Opening
- **15**g: Peripheral wall
- **15**h: Enlarged portion
- **15**k: Side portion
- **16**d: Second portion
- **16**f: Opening
- **16**g: Peripheral wall
- **16**h: Enlarged portion
- **16**k: Side portion
- **16**p: Back portion
- **81**: Strut
- **82**: Tie rod
- **83**: Lower arm portion
- **84**: Tire
- **110**: Bottom portion
- **110**a: Upper surface of bottom portion
- **110**b: Lower surface of bottom portion

## Claims

1. A vehicle steering knuckle (1), comprising:
a body part to which an axle is attached;
an arm portion (1a) including one end integrally connected with an outer periphery (1g) of the body part (1e) and spreading outwardly from the body part along an extending axis (L); and
a connecting portion (11a) integrally connected with another end of the arm portion, the connecting portion being configured to be connected with a vehicle component,
wherein the arm portion comprises:
a first portion (11c) integrally connected with the connecting portion in a direction along the extending axis;
a second portion (11d) interposed between the first portion and the body part; and
a hollow portion (11j) configured to communicate with the first portion and the second portion,
wherein the first portion includes a peripheral wall (11e) configured to enclose the extending axis,
wherein the second portion includes a peripheral wall (11g) including an opening (11f) partially opened around the extending axis,
wherein, at a cross-section (3-3) intersecting the extending axis, an end portion (11h) of the peripheral wall of the second portion on a side of the opening comprises an enlarged portion which is enlarged in width as compared with thickness of side portions (11k) adjacent to the end portion.

2. The vehicle steering knuckle (1) according to claim 1, wherein the enlarged portion is located to intersect a direction of a force acting on the arm portion via the connecting portion (11a).

3. The vehicle steering knuckle (1) according to claim 1, wherein, at the cross-section (3-3) intersecting the extending axis (L), the enlarged portion is provided at both sides of the opening (11f).

4. The vehicle steering knuckle (1) according to claim 1, wherein, in the direction along the extending axis (L), the enlarged portion is extending toward the first portion (11c) and integrated with the peripheral wall (11e) of the first portion.

5. The vehicle steering knuckle (1) according to claim 4, wherein, in the direction along the extending axis (L), the enlarged portion is extending toward the body part and integrated with the body part.

6. The vehicle steering knuckle (1) according to claim 5, wherein a width of the enlarged portion is increased from a center of the second portion (11d) toward the first portion (11c) or the body part along the extending axis (L); and optionally
wherein a width measured nearer to the body part of the end portion (11h) is between 1.1 and 1.7 times greater than a width at a center of the end portion, or
wherein a width measured nearer to the connecting portion (11a) of the end portion is between 1.1 and 2.6 times greater than the width at a center of the end portion.

7. The vehicle steering knuckle (1) according to claim 1, wherein an outer surface of the enlarged portion comprises two or more surfaces (11m, 11n) formed along the extending axis (L); or optionally
wherein a thickness of the enlarged portion is between 2.0 and 7.0 times greater than a thickness of the side portion (11k).

8. The vehicle steering knuckle (1) according to claim 1,
wherein the arm portion (1a) further comprises:
an opening (11f) having the extending axis (L) therethrough; and
an end portion (11h) configured to surround the opening, a width of the end portion being defined from an edge of the opening to a distal edge of the end portion in a vehicle width direction,
wherein a first width at a center of the end portion is less than a second width measured nearer to the connecting portion (11a) of the end portion, and
wherein the first width at the center of the end portion is less than a third width measured nearer to the body part.

9. The vehicle steering knuckle (1) according to claim 8, wherein the third width is between 1.1 and 2.6 times greater than the first width, and
wherein the second width is between 1.1 and 1.7 times greater than the first width.

10. The vehicle steering knuckle (1) according to claim 1,
wherein the arm portion further comprises:
an opening having the extending axis (L) therethrough;
wherein, at a cross-section (3-3) intersecting the extending axis, an end portion (11h) of the peripheral wall of the second portion (11d) on a side of the opening (11f) comprises an enlarged portion which has a second length, the second length being greater than the first length.

11. The vehicle steering knuckle (1) according to claim 10, wherein the second length is between 2.0 and 7.0 times greater than the first length.

12. The vehicle steering knuckle (1) according to claim 10, wherein the opening (11f) has an elliptical shape in which a length of the opening along the extending axis (L) is between 1.2 and 3 times greater than a length of the opening along a direction intersecting the extending axis.

13. The vehicle steering knuckle (1) according to claim 1, wherein an area of the opening (11f) is between 10% and 80% of an area of a region on the side of the opening of the arm portion (1a).

14. The vehicle steering knuckle (1) according to claim 8, wherein the opening (11f) has an elliptical shape in which a length of the opening along the extending axis (L) is between 1.2 and 3 times greater than a length of the opening along a direction intersecting the extending axis; or optionally
wherein an area of the opening is between 10% and 80% of an area of a region on the side of the opening of the arm portion (1a).

15. The vehicle steering knuckle (1) according to claim 10, wherein the opening (11f) has an elliptical shape in which a length of the opening along the extending axis (L) is between 1.2 and 3 times greater than a length of the opening along a direction intersecting the extending axis; or optionally
wherein an area of the opening is between 10% and 80% of an area of a region on the side of the opening of the arm portion (1a).

## Patentansprüche

1. Fahrzeug-Achsschenkel (1), Folgendes umfassend:
einen Hauptteil, an dem eine Achse angebracht ist,
einen Armabschnitt (la), der ein Ende beinhaltet, das integral mit einem Außenumfang (1g) des Hauptteils (1e) verbunden ist und sich vom Hauptteil entlang einer Erstreckungsachse (L) nach außen ausdehnt, und
einen Verbindungsabschnitt (11a), der integral mit einem anderen Ende des Armabschnitts verbunden ist, wobei der Verbindungsabschnitt dafür gestaltet ist, mit einem Fahrzeugbauteil verbunden zu werden,
wobei der Armabschnitt Folgendes umfasst:
einen ersten Abschnitt (11c), der in einer Richtung entlang der Erstreckungsachse integral mit dem Verbindungsabschnitt verbunden ist,
einen zweiten Abschnitt (11d), der zwischen dem ersten Abschnitt und dem Hauptteil eingeschoben ist,
einen hohlen Abschnitt (11j), der dafür gestaltet ist, mit dem ersten Abschnitt und dem zweiten Abschnitt in Verbindung zu stehen,
wobei der erste Abschnitt eine Umfangswand (11e) beinhaltet, die dafür gestaltet ist, die Erstreckungsachse zu umschließen,
wobei der zweite Abschnitt eine Umfangswand (11g) beinhaltet, die eine Öffnung (11f) beinhaltet, die sich teilweise um die Erstreckungsachse öffnet,
wobei ein Endabschnitt (11h) der Umfangswand des zweiten Abschnitts in einem Querschnitt (3-3), der die Erstreckungsachse schneidet, an einer Seite der Öffnung einen vergrößerten Abschnitt umfasst, der im Vergleich zur Dicke der Seitenabschnitte (11k) angrenzend an den Endabschnitt in der Breite vergrößert ist.

2. Fahrzeug-Achsschenkel (1) nach Anspruch 1, wobei der vergrößerte Abschnitt dafür angeordnet ist, eine Richtung einer Kraft zu schneiden, die über den Verbindungsabschnitt (11a) auf den Armabschnitt wirkt.

3. Fahrzeug-Achsschenkel (1) nach Anspruch 1, wobei der vergrößerte Abschnitt an dem Querschnitt (3-3), der die Erstreckungsachse (L) schneidet, an beiden Seiten der Öffnung (11f) bereitgestellt ist.

4. Fahrzeug-Achsschenkel (1) nach Anspruch 1, wobei sich der vergrößerte Abschnitt in der Richtung entlang der Erstreckungsachse (L) hin zum ersten Abschnitt (11c) erstreckt und in die Umfangswand (11e) des ersten Abschnitts integriert ist.

5. Fahrzeug-Achsschenkel (1) nach Anspruch 4, wobei sich der vergrößerte Abschnitt in der Richtung entlang der Erstreckungsachse (L) hin zum Hauptteil erstreckt und in den Hauptteil integriert ist.

6. Fahrzeug-Achsschenkel (1) nach Anspruch 5, wobei eine Breite des vergrößerten Abschnitts von einer Mitte des zweiten Abschnitts (11d) hin zu dem ersten Abschnitt (11c) oder dem Hauptteil entlang der Erstreckungsachse (L) zunimmt und optional
wobei eine Breite, die näher am Hauptteil des Endabschnitts (11h) gemessen wird, zwischen 1,1- und 1,7mal größer als eine Breite an einer Mitte des Endabschnitts ist oder
wobei eine Breite, die näher am Verbindungsabschnitt (11a) des Endabschnitts gemessen wird, zwischen 1,1- und 2,6mal größer als eine Breite an einer Mitte des Endabschnitts ist.

7. Fahrzeug-Achsschenkel (1) nach Anspruch 1, wobei eine Außenfläche des vergrößerten Abschnitts zwei oder mehr Flächen (11m, 11n) umfasst, die entlang der Erstreckungsachse (L) gebildet sind, oder optional
wobei eine Dicke des vergrößerten Abschnitts zwischen 2,0- und 7,0mal größer als eine Dicke des Seitenabschnitts (11k) ist.

8. Fahrzeug-Achsschenkel (1) nach Anspruch 1, wobei der Armabschnitt (1a) ferner Folgendes umfasst:
eine Öffnung (11f), die die durch sie hindurch verlaufende Erstreckungsachse (L) aufweist, und
einen Endabschnitt (11h), der dafür gestaltet ist, die Öffnung zu umgeben, wobei eine Breite des Endabschnitts in einer Fahrzeugbreiterichtung von einem Rand der Öffnung zu einem entfernten Rand des Endabschnitts definiert ist,
wobei eine erste Breite an einer Mitte des Endabschnitts kleiner als eine zweite Breite ist, die näher am Verbindungsabschnitt (11a) des Endabschnitts gemessen wird, und
wobei die erste Breite an der Mitte des Endabschnitts kleiner als eine dritte Breite ist, die näher am Hauptteil gemessen wird.

9. Fahrzeug-Achsschenkel (1) nach Anspruch 8, wobei die dritte Breite zwischen 1,1- und 2,6mal größer als die erste Breite ist und
wobei die zweite Breite zwischen 1,1- und 1,7mal größer als die erste Breite ist.

10. Fahrzeug-Achsschenkel (1) nach Anspruch 1, wobei der Armabschnitt ferner Folgendes umfasst:
eine Öffnung, die die durch sie hindurch verlaufende Erstreckungsachse (L) aufweist,
wobei ein Endabschnitt (11h) der Umfangswand des zweiten Abschnitts (11d) an einem Querschnitt (3-3), der die Erstreckungsachse schneidet, an einer Seite der Öffnung (11f) einen vergrößerten Abschnitt umfasst, der eine zweite Länge aufweist, wobei die zweite Länge größer als die erste Länge ist.

11. Fahrzeug-Achsschenkel (1) nach Anspruch 10, wobei die zweite Länge zwischen 2,0- und 7,0mal größer als die erste Länge ist.

12. Fahrzeug-Achsschenkel (1) nach Anspruch 10, wobei die Öffnung (111) eine elliptische Form aufweist, bei der eine Länge der Öffnung entlang der Erstreckungsachse (L) zwischen 1,2- und 3mal größer als eine Länge der Öffnung entlang einer Richtung ist, welche die Erstreckungsachse schneidet.

13. Fahrzeug-Achsschenkel (1) nach Anspruch 1, wobei eine Fläche der Öffnung (11f) zwischen 10 und 80 % einer Fläche eines Bereichs an der Seite der Öffnung des Armabschnitts (1a) beträgt.

14. Fahrzeug-Achsschenkel (1) nach Anspruch 8, wobei die Öffnung (11f) eine elliptische Form aufweist, bei der eine Länge der Öffnung entlang der Erstreckungsachse (L) zwischen 1,2- und 3mal größer als eine Länge der Öffnung entlang einer Richtung ist, welche die Erstreckungsachse schneidet, oder optional
wobei eine Fläche der Öffnung zwischen 10 und 80 % einer Fläche eines Bereichs an der Seite der Öffnung des Armabschnitts (1a) beträgt.

15. Fahrzeug-Achsschenkel (1) nach Anspruch 10, wobei die Öffnung (11f) eine elliptische Form aufweist, bei der eine Länge der Öffnung entlang der Erstreckungsachse (L) zwischen 1,2- und 3mal größer als eine Länge der Öffnung entlang einer Richtung ist, welche die Erstreckungsachse schneidet, oder optional
wobei eine Fläche der Öffnung zwischen 10 und 80 % einer Fläche eines Bereichs an der Seite der Öffnung des Armabschnitts (1a) beträgt.

## Revendications

1. Porte-fusée de direction de véhicule (1), comportant :
une partie formant corps à laquelle un essieu est attaché ;
une partie formant bras (1a) comprenant une extrémité raccordée d'un seul tenant à une périphérie extérieure (1g) de la partie formant corps (1e) et se déployant vers l'extérieur depuis la partie formant corps le long d'un axe qui va en s'étendant (L) ; et
une partie formant raccord (11a) raccordée d'un seul tenant à une autre extrémité de la partie formant bras, la partie formant raccord étant configurée pour être raccordée à une pièce du véhicule,
dans lequel la partie formant bras comporte :
une première partie (11c) raccordée d'un seul tenant à la partie formant raccord dans une direction le long de l'axe qui va en s'étendant ;
une deuxième partie (11d) intercalée entre la première partie et la partie formant corps ; et
une partie creuse (11j) configurée pour communiquer avec la première partie et la deuxième partie,
dans lequel la première partie comprend une paroi périphérique (11e) configurée pour renfermer l'axe qui va en s'étendant,
dans lequel la deuxième partie comprend une paroi périphérique (11g) comprenant une ouverture (11f) partiellement ouverte autour de l'axe qui va en s'étendant,
dans lequel, au niveau d'une coupe transversale (3-3) croisant l'axe qui va en s'étendant, une partie d'extrémité (11h) de la paroi périphérique de la deuxième partie d'un côté de l'ouverture comporte une partie agrandie qui est agrandie en largeur par rapport à l'épaisseur de parties latérales (11k) adjacentes à la partie d'extrémité.

2. Porte-fusée de direction de véhicule (1) selon la revendication 1, dans lequel la partie agrandie est positionnée pour croiser une direction d'une force agissant sur la partie formant bras par le biais de la partie formant raccord (11a).

3. Porte-fusée de direction de véhicule (1) selon la revendication 1, dans lequel, au niveau de la coupe transversale (3-3) croisant l'axe qui va en s'étendant (L), la partie agrandie est mise en oeuvre au niveau des deux côtés de l'ouverture (11f).

4. Porte-fusée de direction de véhicule (1) selon la revendication 1, dans lequel, dans la direction le long de l'axe qui va en s'étendant (L), la partie agrandie s'étend vers la première partie (11c) et est d'un seul tenant avec la paroi périphérique (11e) de la première partie.

5. Porte-fusée de direction de véhicule (1) selon la revendication 4, dans lequel, dans la direction le long de l'axe qui va en s'étendant (L), la partie agrandie s'étend vers la partie formant corps et est d'un seul tenant avec la partie formant corps.

6. Porte-fusée de direction de véhicule (1) selon la revendication 5, dans lequel une largeur de la partie agrandie est augmentée depuis un centre de la deuxième partie (11d) vers la première partie (11c) ou la partie formant corps le long de l'axe qui va en s'étendant (L) ; et éventuellement
dans lequel une largeur mesurée plus près de la partie formant corps de la partie d'extrémité (11h) est entre 1,1 et 1,7 fois plus grande qu'une largeur au niveau d'un centre de la partie d'extrémité, ou
dans lequel une largeur mesurée plus près de la partie formant raccord (11a) de la partie d'extrémité est entre 1,1 et 2,6 fois plus grande que la largeur au niveau d'un centre de la partie d'extrémité.

7. Porte-fusée de direction de véhicule (1) selon la revendication 1, dans lequel une surface extérieure de la partie agrandie comporte deux surfaces ou plus (11m, 11n) formées le long de l'axe qui va en s'étendant (L) ; ou éventuellement
dans lequel une épaisseur de la partie agrandie est entre 2,0 et 7,0 fois plus grande qu'une épaisseur de la partie latérale (11k).

8. Porte-fusée de direction de véhicule (1) selon la revendication 1,
dans lequel la partie formant bras (1a) comporte par ailleurs :
une ouverture (11f) ayant l'axe qui va en s'étendant (L) au travers de celle-ci ; et
une partie d'extrémité (11h) configurée pour entourer l'ouverture, une largeur de la partie d'extrémité étant définie depuis un bord de l'ouverture jusqu'à un bord distal de la partie d'extrémité dans une direction allant dans le sens de la largeur du véhicule,
dans lequel une première largeur au niveau d'un centre de la partie d'extrémité est inférieure à une deuxième largeur mesurée plus près de la partie formant raccord (11a) de la partie d'extrémité, et
dans lequel la première largeur au niveau du centre de la partie d'extrémité est inférieure à une troisième largeur mesurée plus près de la partie formant corps.

9. Porte-fusée de direction de véhicule (1) selon la revendication 8, dans lequel la troisième largeur est entre 1,1 et 2,6 fois plus grande que la première largeur, et
dans lequel la deuxième largeur est entre 1,1 et 1,7 fois plus grande que la première largeur.

10. Porte-fusée de direction de véhicule (1) selon la revendication 1,
dans lequel la partie formant bras comporte par ailleurs :
une ouverture ayant l'axe qui va en s'étendant (L) au travers de celle-ci ;
dans lequel, au niveau d'une coupe transversale (3-3) croisant l'axe qui va en s'étendant, une partie d'extrémité (11h) de la paroi périphérique de la deuxième partie (11d) d'un côté de l'ouverture (11f) comporte une partie agrandie qui a une deuxième longueur, la deuxième longueur étant plus grande que la première longueur.

11. Porte-fusée de direction de véhicule (1) selon la revendication 10, dans lequel la deuxième longueur est entre 2,0 et 7,0 fois plus grande que la première longueur.

12. Porte-fusée de direction de véhicule (1) selon la revendication 10, dans lequel l'ouverture (11f) a une forme elliptique où une longueur de l'ouverture le long de l'axe qui va en s'étendant (L) est entre 1,2 et 3 fois plus grande qu'une longueur de l'ouverture le long d'une direction croisant l'axe qui va en s'étendant.

13. Porte-fusée de direction de véhicule (1) selon la revendication 1, dans lequel une superficie de l'ouverture (11f) est entre 10 % et 80 % d'une superficie d'une région du côté de l'ouverture de la partie formant bras (1a).

14. Porte-fusée de direction de véhicule (1) selon la revendication 8, dans lequel l'ouverture (111) a une forme elliptique où une longueur de l'ouverture le long de l'axe qui va en s'étendant (L) est entre 1,2 et 3 fois plus grande qu'une longueur de l'ouverture le long d'une direction croisant l'axe qui va en s'étendant ; ou éventuellement
dans lequel une superficie de l'ouverture est entre 10 % et 80 % d'une superficie d'une région du côté de l'ouverture de la partie formant bras (1a).

15. Porte-fusée de direction de véhicule (1) selon la revendication 10, dans lequel l'ouverture (11f) a une forme elliptique où une longueur de l'ouverture le long de l'axe qui va en s'étendant (L) est entre 1,2 et 3 fois plus grande qu'une longueur de l'ouverture le long d'une direction croisant l'axe qui va en s'étendant ; ou éventuellement
dans lequel une superficie de l'ouverture est entre 10 % et 80 % d'une superficie d'une région du côté de l'ouverture de la partie formant bras (1a).
